# EUROPEAN PATENT SPECIFICATION

(11) **EP 2 870 854 B1**
(45) Date of publication and mention of the grant of the patent: **27.07.2016**
(21) Application number: 14184525.5
(22) Date of filing: 12.09.2014
(51) Int. Cl.: A01D 34/86, A01D 75/20, B60R 21/13, A01D 43/063

(54) **Riding-type mower**
Aufsitzmäher
Tracteur de tondeuse

(30) Priority: 11.11.2013 JP 2013233296
(43) Date of publication of application: 13.05.2015
(73) Proprietor: Kubota Corporation, Osaka 556-8601 (JP)
(72) Inventor: Nagai, Hiroki, Sakai-City, Osaka 590-0823 (JP); Fujino, Masanori, Sakai-City, Osaka 590-0823 (JP); Harada, Eriya, Sakai-City, Osaka 590-0823 (JP)
(74) Representative: Global IP Europe Patentanwaltskanzlei

(56) References cited:
- EP-A2- 1 197 399
- EP-A2- 1 844 990
- EP-A2- 2 314 483
- JP-A- 2005 198 586
- US-A1- 2012 104 802
- US-A1- 2013 049 338

## Description

### Technical Field

The present invention relates to a riding-type mower, which mows grass (e.g., turf) while traveling by self-propulsion and stores the mowed grass in a grass container mounted to the body of the mower.

### Background of the Invention

JP2013-000105A (Figs. 1 and 3) and JP2013-039094A (Figs. 1 and 3) disclose riding-type mowers having support frames provided on a body side to which a grass container is detachably coupled via linkage mechanism. The linkage mechanism is parallel link mechanism, and right-and-left upper links (arms), and right-and-left lower links (arms) are coupled to a left coupling body and a right coupling body, respectively, and these right-and-left coupling bodies are further mounted to top end parts of a pair of pillar-shaped support frames (pillars) extending straightly substantially upward, to couple the linkage mechanism to the support frames (pillars). Since these pillar-shaped support frames are fixed to a rear part of a body frame and extend behind an operator's seat, to locations higher than the operator's seat, the support frames are also intended to have a function as roll-prevention frames, as disclosed in [0075] of JP2013-000105A. However, since the coupling bodies for coupling the linkage mechanism is mounted to the top sections of the pillar-shaped support frames (pillars) which function as the roll-prevention frames, the shapes and postures of the support frames are limited according to the mounting structure of the coupling bodies. Particularly, if the heights of the support frames (pillars) are designed to be high, since the support frames may contact obstacles above the support frames when the mower is stored in a barn or passing under trees where the obstacles exist, the support frames need to be foldable. Even if such a foldable structure is adopted, it is necessary to devise so that the foldable structure of the support frames (pillars) does not interfere with the mounting parts of the linkage mechanism.

Therefore, mowers have been demanded in which the mowers are provided with pillars which can avoid interferences with the linkage mechanism and can reduce the heights of the pillars if needed.

JP 2005-198586 discloses a riding-type mower, comprising a body frame movably supported by front wheels and rear wheels; a cockpit arranged over the body frame (1), the cockpit having an operator's seat; a pair of pillars fixed to the body frame, each of the pillars extending upwardly towards a space above the operator's seat, having a base end part attached to the body frame and a free end part at which a coupling part is formed, and being spaced out from each other with respect to the width direction of the mower; a linkage mechanism coupled to the pair of pillars at positions below the coupling part of each pillar; and a grass container held by the linkage mechanism.

### Summary of the Invention

According to one aspect of the present invention, a riding-type mower is provided. The riding-type mower has a body frame movably supported by front wheels and rear wheels; a cockpit arranged over the body frame, the cockpit having an operator's seat; a pair of pillars fixed to the body frame, each of the pillars extending upwardly towards a space above the operator's seat, having a base end part attached to the body frame and a free end part at which a coupling part is formed, and being spaced out from each other with respect to the width direction of the mower; an upper unit disposed between mutually-facing inner side surfaces of the free end part of each pillar, the upper unit being swingably coupled to the coupling part of each pillar about a swing axis extending along the width direction of the mower, and being configured to swing within a predetermined swing range between an extended swung position and an retracted swung position; a linkage mechanism coupled to the pair of pillars at positions below the coupling part of each pillar; and a grass container held by the linkage mechanism.

The width direction of the mower corresponds to the lateral direction of the mower which substantially perpendicularly crosses the longitudinal direction of the mower.

According to the above configuration, the upper unit is further coupled to the free end parts of the pillars which are upper end parts where the linkage mechanism is coupled and supported, and the upper unit is swingable about the lateral axes extending in the body lateral direction. Here, since the upper unit is disposed between the mutually-facing inner surfaces of the free end parts (top end parts) of the pillars, the swing range of the upper unit can be fitted within the distance between the pillars. Thus, the upper unit does not interfere with the pillars, even if the swing angle becomes large. Further, if the linkage mechanism is coupled to the rear surfaces of the pillars like the conventional structures, there is an advantage that the upper unit does not interfere with the linkage mechanism which is coupled to and supported by the pillars within the swing locus of the upper unit. The upper unit further extended from the free end parts of the pillars can avoid the contact with beams of a barn or trees by swinging the upper unit downwardly in advance. According to a preferred embodiment of the riding-type mower mentioned above, the riding-type mower is configured such that the upper unit is positioned at the extended swung position in normal use, and that the upper unit is positioned at the retracted swung position which is lower than the extended swung position.

When the upper unit located at the extended swung position, since the swing of the upper unit from the extended swung position to the retracted swung position is consciously carried out by an operator because it is an retraction work of the upper unit; however, the operator may have no interest in the swing in the opposite direction. Therefore, it is useful to have a function for preventing the swing in the opposite direction.

For this reason, according to another preferred embodiment of any riding-type mower mentioned above, the riding-type mower is configured such that the upper unit is positioned at the extended swung position in normal use, and that the upper unit is positioned at the retracted swung position which is lower than the extended swung position.

In another preferred embodiment of any the riding-type mower mentioned above, the upper unit has a substantially U-like shape, both ends of the upper unit being swingably attached to the inner side surfaces of the coupling parts of the pair of pillars about the swing axis.

In another preferred embodiment of any riding-type mower mentioned above, at least a top part being most distant from the swing axis and the parts vicinity of the both ends of the upper unit are configured to swing within a space a width of which is narrower than the distance between the pair of pillars. Thus, since at least the top part of the upper unit (the section most distant from the swing axis) can be fitted between the pair of pillars, a dead space produced by the upper unit located at the retracted swung position can be reduced. In such a case, the entire width of the swing range of the upper unit along the width direction of the mower may be narrower than the distance between the pair of the pillars. Thus, the entire upper unit can be fitted between the pair of pillars and a degree of freedom in designing the retracted swung position is improved.

According to another preferred embodiment of any riding-type mower mentioned above, the top part of the upper unit is positioned above the swing axis when the upper unit is positioned at the extended swung position, and the top part of the upper unit is positioned below the swing axis when the upper unit is positioned at the retracted swung position.

Since the mower may travel in a state where the upper unit is extended to the extended swung position or stored at the retracted swung position, the upper unit is preferably fixed at least at the extended swung position and the retracted swung position. Particularly, since the upper unit is located high at the extended swung position, a downward swing from the extended swung position should be performed carefully, taking acceleration by gravity into consideration.

Therefore, according to another preferred embodiment of any riding-type mower mentioned above, the coupling part of each pillar includes a locking mechanism configured to lock the upper unit at the extended swung position and the retracted swung position.

A dual-lock system of the locking device and the reserve stopper is applied to the upper unit at least for the swing in one direction from the extended swung position. Therefore, the swing operation of the upper unit by the operator from above can be carried out more carefully.

According to another preferred embodiment of any riding-type mower mentioned above, the coupling part of each pillar includes a reserve stopper configured to prevent the upper unit from swinging downwardly from the extended swung position.

According to a further preferred embodiment of any riding-type mower mentioned above, the reserve stopper is configured to prevent the upper unit from swinging over the operator's seat from the extended swung position to the retracted swung position of the upper unit. In the case that release of both the locking devices and the reserve stoppers is required in order to downwardly swing the upper unit toward the operator's seat, this downward swing operation turns into work requiring much more carefulness.

An a simple configuration of the locking device is such that holes are in the coupling part and the upper unit so that the holes are coaxial at the extended swung position, and a pin is inserted into the coaxial holes.

According to a further preferred embodiment of any riding-type mower mentioned above, the lock mechanism includes: a first lock hole formed in the coupling part of each pillar, and a lock hole formed in the upper unit, and the coupling part and the upper unit are configured such that a lock pin can be inserted along the swing axis through both of the first lock hole and the lock hole so as to prevent the upper unit from swinging when the upper unit is positioned at the extended swung position.

According to a further preferred embodiment of any riding-type mower mentioned above, the lock mechanism includes: a second lock hole formed in the coupling part of each pillar, and a lock hole formed in the upper unit, and the coupling part and the upper unit are configured such that a lock pin can be inserted along the swing axis through both of the second lock hole and the lock hole so as to prevent the upper unit from swinging when the upper unit is positioned at the retracted swung position.

If a structure in which a falling speed of the upper unit located upwardly is reduced when the upper unit swings downwardly by gravity, preferably, a structure in which the upper unit can swing downwardly when an external or intentional force is applied by the operator, is adopted, the operation of the upper unit can be safe.

In order to realize this, according to another preferred embodiment of any riding-type mower mentioned above, the mower has a swing control implement configured to suppress the swing of the upper unit by a frictional force.

According to another preferred embodiment of any riding-type mower mentioned above, the upper unit has a substantially U shape-like frame formed from a square pipe, the top part of the square pipe being bent such that the top part projects over the space above the operator's seat when the upper unit is at the extended swung position, each pillar is formed from a square pipe, and each of the coupling parts is a U-shaped bracket that surrounds the free end parts of a corresponding pillar and has an extended portion projected from the pillar toward the rear direction of the mower.

With this configuration, the upper unit and the pillars are lightweight and excel in rigidity, and the upper unit is coupled to the pillars via the coupling parts which surround the side faces of the pillars to provide stability in the strength. Further, the lock holes for the locking devices can be formed in the extended portions of the coupling parts so as to be sufficiently separated from the lateral axes as the swing axes.

According to another preferred embodiment of any riding-type mower mentioned above, the pair of pillars are disposed behind a backrest of the operator's seat, and the upper unit is located behind the backrest at the retracted swung position. The upper unit can be stored in a space which does not interfere with other instruments and, thus, effective use of the space is achieved.

According to another preferred embodiment of any riding-type mower mentioned above, the linkage mechanism is a parallel link mechanism having a pair of upper links and a pair of lower links, each of the upper links and each of the lower links being individually and detachably attached to the pair of pillars, and the pair of upper links and the pair of lower links are configured to hold the grass container between the upper links and between the lower links. With this configuration, the upper link and the lower link can be individually coupled to the corresponding pillar and, thus, a degree of freedom in the coupling operation improves. Further, any coupling members for coupling the swing axis part of the upper link and the swing axis part of the lower link become unnecessary and, thus, an advantage in weight reduction of the linkage mechanism is also achieved.

Although piston cylinders are typically used for elevating and lowering the linkage mechanism for lifting the grass container, attachable-and-detachable structures of piping of the piston cylinders are needed if the piston cylinders are configured to remain on the linkage mechanism side when the linkage mechanism is disengaged from the pillars. On the other hand, if the piston cylinders are configured to remain on the pillar side when the linkage mechanism is disengaged from the pillars, such attachable-and-detachable structures of the piping are no longer essential.

In order to acquire such an advantage, according to another preferred embodiment of any riding-type mower mentioned above, a pair of piston cylinders configured to elevate the linkage mechanism, one end of each piston cylinder being swingably coupled to the body frame or the corresponding pillar, and the other end of each piston cylinder being detachably coupled to the link mechanism.

### Brief Description of the Drawings

The present disclosure is illustrated by way of example and not by way of limitation in the figures of the accompanying drawings, in which the like reference numerals indicate like elements and in which:
Fig. 1 is a schematic view illustrating a fundamental configuration of a riding-type mower according to a preferred embodiment of the present invention;
Fig. 2 is a side view illustrating the entire configuration of a mid-mounted riding-type mower which is one of preferred embodiments of the present invention;
Fig. 3 is a plan view of the mid-mounted riding-type mower illustrated in Fig. 2;
Fig. 4 is an enlarged side view of Fig. 2, illustrating a linkage mechanism coupled to pillars, and a grass container;
Fig. 5 is a front view of the mid-mounted riding-type mower illustrated in Fig. 2;
Fig. 6 is a perspective view illustrating a coupling structure between the pillars and upper unit, and the pillars and the linkage mechanism, seen from right rear;
Fig. 7 is a cross-sectional view illustrating the coupling structure between the pillar and the upper unit;
Fig. 8 is a side view schematically illustrating a lock device for locking a swung position of the upper unit with respect to the pillar;
Fig. 9 is a side view schematically illustrating the lock device for locking the swung position of the upper unit with respect to the pillar;
Fig. 10 is a side view illustrating the linkage mechanism which is elevated and the grass container at a cut-grass discharging posture;
Fig. 11 is a perspective view illustrating a reverse rotation preventing mechanism provided between the pillar and the upper unit;
Fig. 12 is a side view illustrating the reverse rotation preventing mechanism provided between the pillar and the upper unit;
Fig. 13 is a cross-sectional view illustrating a coupling structure between the pillar and the linkage mechanism;
Fig. 14 is a perspective view illustrating a mounting structure of a base end part of an elevator cylinder to a body frame;
Fig. 15 is a side view illustrating a state immediately before removing the linkage mechanism and the grass container from the pillars;
Fig. 16 is a side view illustrating the linkage mechanism and the grass container which are removed from the pillars;
Fig. 17 is a side view of a zero-turn mower which is another preferred embodiment of the present invention;
Fig. 18 is a perspective view of an upper unit of the zero-turn mower; and
Fig. 19 is a side view illustrating a linkage mechanism and a grass container of still another embodiment.

### Detailed Description

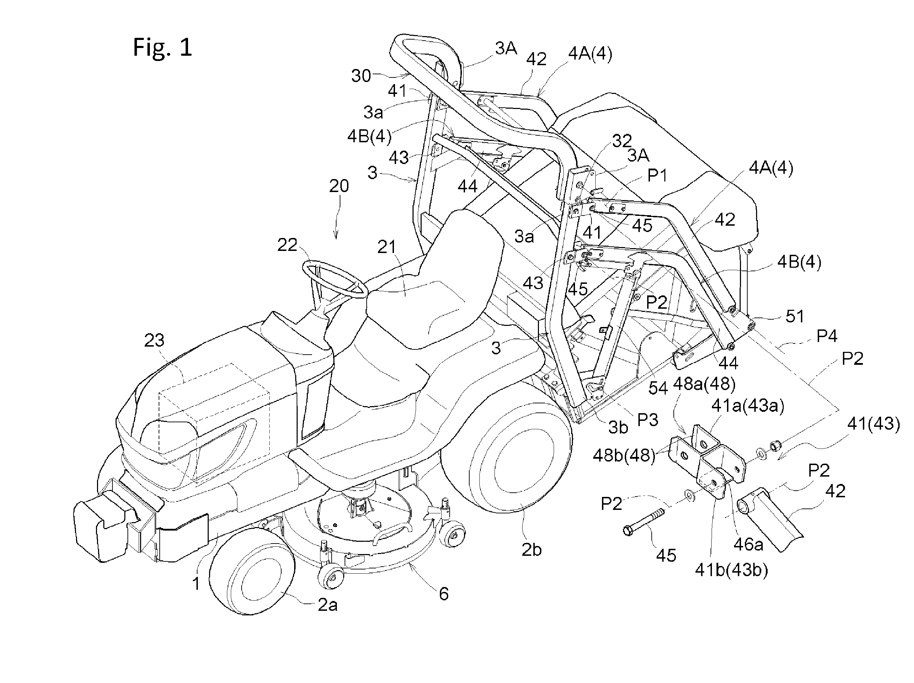

Before describing particular embodiments of a riding-type mower according to a preferred embodiment of the present invention, a fundamental configuration of the riding-type mower by which the preferred embodiment of the present invention is characterized will be described briefly using Fig. 1. Note that, unless otherwise particularly described, the phrase "rear-to-front direction" as used herein refers to a longitudinal direction of the body of the riding-type mower which is in general a traveling direction of the mower. Likewise, the phrase "lateral direction (transverse direction)" or "right-and-left direction" as used herein refers to a direction horizontally crossing the longitudinal direction of the body of the mower. The "lateral direction" corresponds to the width direction of the mower. Likewise, "right" and "left" mean the right side and the left side with respect to the forward-traveling direction of the mower, respectively. Likewise, the phrase "vertical direction" or "height direction" refers to a normal direction to the ground surface or to a body horizontal plane. Therefore, "perpendicular" is not intended to be exact perpendicular angles or right angles, but deviations from the perpendicularity may suitably selected or inevitably produced according to the structural or fabricating natures of the mower and components thereof, which can be appreciated by one of ordinary skill in the art.

In the riding-type mower illustrated in Fig. 1, an engine 23 is disposed in a front part of a body frame 1 which is supported on the ground surface by front wheels 2a and the rear wheels 2b (only left side wheels are illustrated), and a cockpit 20 is disposed in a rear part. A steering wheel 22 and an operator's seat 21 are provided in the cockpit 20. The riding-type mower schematically illustrated in Fig. 1 is a mid-mounted riding-type mower in which a mower unit 6 is suspended from the body frame 1, between the front wheels 2a and the rear wheels 2b. A pair of pillars 3 extending upwardly is disposed behind the operator's seat 21. Base end parts 3b of the right-and-left pillars 3 are fixedly supported by the body frame 1. Coupling parts 3A are formed in free end parts 3a which are tip ends of the pillars 3. An upper unit 30 is disposed between mutually-facing inner surfaces of the free end parts 3a of the pillars 3. The upper unit 30 is swingably coupled to each corresponding coupling part 3A about a lateral axis P1 extending in the body lateral direction.

In the example illustrated in Fig. 1, the upper unit 30 has a gate shape which is bent forward at intermediate locations, and it swings about the lateral axis P1 between an extended swung position in which the upper unit 30 extends upwardly and a retracted swung position in which the upper unit 30 extends downwardly. That is, the upper unit 30 has a bending shape in which the central top part of the upper unit 30 extends above the operator's seat 21 at the extended swung position. The upper unit 30 is located behind the operator's seat 21 at the retracted swung position. In other words, the upper unit 30 is positioned at the extended swung position in normal use, and the retracted swung position is lower than the extended swung position. Thus, the swing locus of the upper unit 30 is configured to enter into a space defined by a vertical plane passing through the inner surface of the left pillar 3 and a vertical plane passing through the inner surface of the right pillar 3. Therefore, interference of the upper unit 30 with the pillars 3 can be avoided at the time of swinging, and the swing range of the upper unit 30 can be increased. Note that the upper unit 30 does not need to be such an integral structure where a left leg member is coupled to a right leg member by a transverse member, but it may be configured in a two-part structure where the upper unit 30 can be divided into a left member and a right member at the center.

A lock device 32 for locking the upper unit 30 at least at the extended swung position and the retracted swung position is provided between each coupling part 3A and the upper unit 30. One simple example of the lock device 32 is a lock-pin structure in which a lock pin is inserted into holes formed in each coupling part 3A and the upper unit 30.

A linkage mechanism 4 for supporting a grass container 5 and for elevating and lowering the grass container 5 is mounted to an upper area of the pillars 3. The linkage mechanism 4 includes right-and-left upper links 4A and right-and-left lower links 4B. The left upper link 4A is mounted to the left pillar 3, and the right upper link 4A is mounted to the right pillar 3. Similarly, the left lower link 4B is mounted to the left pillar 3, and the right lower link 4B is mounted to the right pillar 3. Note that mounting of the upper links 4A to the pillars 3 and mounting of the lower links 4B to the pillars 3 can be performed individually.

When removing the grass container 5 from the riding-type mower, the linkage mechanism 4 is disengaged from the pillars 3 together with the grass container 5. On the contrary, when mounting the grass container 5 to the riding-type mower, the linkage mechanism 4 is mounted to the pillars 3 together with the grass container 5. Each upper link 4A has an upper mounting bracket 41 having a function suitable for mounting to the pillar 3, and an upper link main body 42 having a function as a swing link. Similarly, each lower link 4B has a lower mounting bracket 43 having a function suitable for mounting to the pillar 3, and a lower link main body 44 having a function as a swing link. In this embodiment, the upper mounting bracket 41 and the lower mounting bracket 43 are substantially the same members. Both the mounting brackets 41 and 43 are provided with the mounting function to the pillar 3 and the swing fulcrum function with respect to the link main body. Simply, the mounting function can be realized with a securing pin structure, and the swing fulcrum function can be realized with a swing pin structure. In such a case, it is also possible to form the securing pin for mounting and the swing pin for swinging from a single common pin; however, in order to obtain more secured and more stable functions, the pin may be divided in to the mounting function part and the swing fulcrum function part. In the example illustrated in Fig. 1, the lower mounting bracket 43 is comprised of a mounting part 43a and a swing fulcrum part 43b which are joined to each other. Similarly, the upper mounting bracket 41 is also comprised of a mounting part 41a and a swing fulcrum part 41b.

An enlarged in Fig. 1, each of the mounting parts 41a and 43a is provided with a mounting guide 48 which is comprised of a receiver opening 48a formed corresponding to the cross-sectional shape of the pillar 3, and a receiving guide surface 48b. Thus, the mounting parts 41a and 43a can be smoothly mounted to the pillar 3 as the riding-type mower and the linkage mechanism 4 relatively approach toward each other. After the mounting parts 41a and 43a are mounted to the pillar 3, the mounting parts 41a and 43a are fixed to the pillar 3 with fastening bolts, lock pins, etc. Instead of the fastening bolts, quick clamps may also be used, for example. The mounting part 41a or 43a may be joined to the swing fulcrum part 41b or 43b, for example, by welding, or may be formed integrally with the swing fulcrum part 41b or 43b. In the example of Fig. 1, the swing fulcrum part 43b of the lower mounting bracket 43 is swingably coupled to one end of the lower link main body 44 with a link pin 45. Similarly, the swing fulcrum part 41b of the upper mounting bracket 41 is swingably coupled to one end of the upper link main body 42 with the link pin 45. The other end of the upper link main body 42 and the other end of the lower link main body 44 are swingably coupled to a container-side link 51 which also functions as a container bracket of the grass container 5.

If the upper mounting bracket 41 (or the lower mounting bracket 43) is configured to be freely rotatable about the lateral axis with respect to the upper link main body 42 (or the lower link main body 44), it rotates, in the free state, downwardly with gravity. Thus, the posture suitable for the upper mounting bracket 41 (or the lower mounting bracket 43) when mounting the upper mounting bracket 41 (or the lower mounting bracket 43) to the pillar 3, cannot be guaranteed. Therefore, a posture maintaining mechanism for maintaining the posture of the upper mounting bracket 41 (or the lower mounting bracket 43) in the free state when mounting the upper mounting bracket 41 (or the lower mounting bracket 43) to the upper link main body 42 (or the lower link main body 44) at the posture suitable for mounting, is needed. Such a posture maintaining mechanism is realizable by using a stopper for limiting the rotation range, for example. Similarly, the upper link main body 42 (or the lower link main body 44) itself is also configured to be freely swingable about a link fulcrum of the lateral axis with respect to the grass container 5 in its free state. Therefore, a posture maintaining mechanism for maintaining the swing posture of the upper link main body 42 (or the lower link main body 44) with respect to the grass container 5 at the posture suitable for mounting the upper link main body 42 (or the lower link main body 44) to the pillar 3 of the linkage mechanism 4, is needed. Such a posture maintaining mechanism for the upper link main body 42 (or the lower link main body 44) is also realizable with, for example, stoppers, spacers, or position lock pins.

When the linkage mechanism 4 described above is mounted to the pillars 3, the linkage mechanism 4 and, as a result, the grass container 5 is elevated by lifting the upper link main bodies 42 or the lower link main bodies 44 upwardly about the swing fulcrums of the swing fulcrum parts 41b or the swing fulcrum parts 43b. This lifting operation is performed by elevator cylinders 54, which are typically hydraulic or electric piston cylinders. In the example in Fig. 1, one end sides (the cylinder sides in Fig. 1) of the elevator cylinders 54 are swingably coupled to the body frame 1, and the other end sides (the piston side in Fig. 1) of the elevator cylinders 54 are detachably and swingably coupled to the lower link main bodies 44. Therefore, when the linkage mechanism 4 is removed from the body frame 1 together with the grass container 5, the elevator cylinders 54 will remain at the body frame side. This brings an advantage that, when removing the linkage mechanism 4, a removing operation of hydraulic piping or electric wiring from the elevator cylinders 54 is unnecessary.

### Embodiment 1

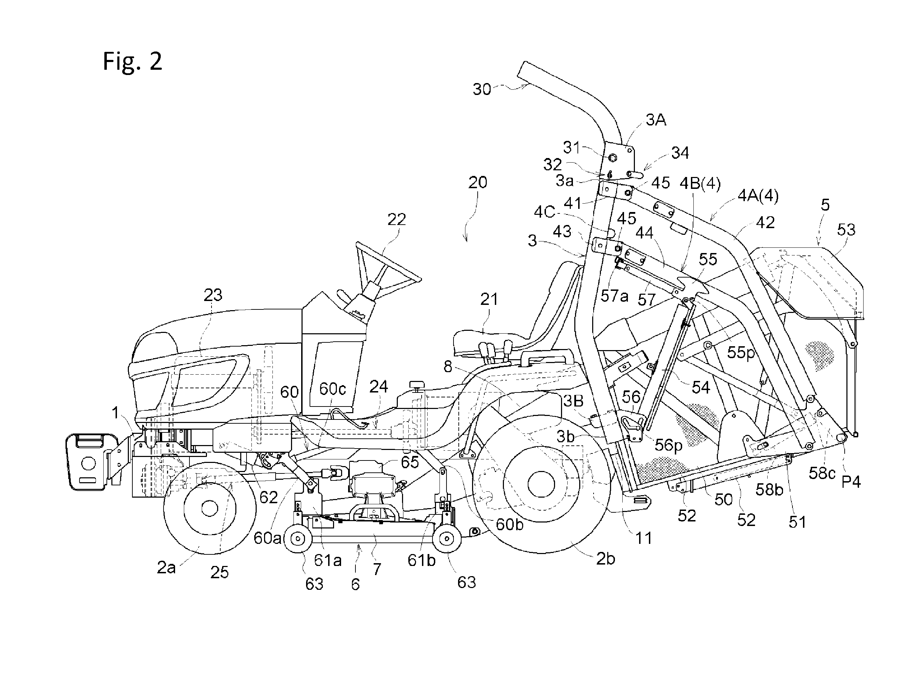

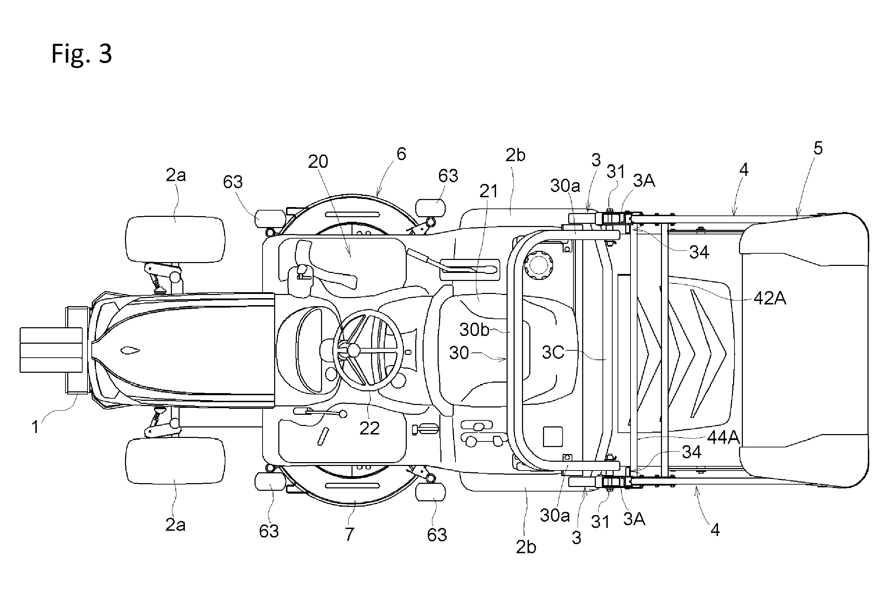

Next, one of preferred embodiments of the riding-type mower according to the present invention is described with reference to the accompanying drawings. Fig. 2 is a side view illustrating the entire mid-mounted riding-type mower which is one example of the riding-type mower described above, and Fig. 3 is a plan view of Fig. 2. Although this riding-type mower (hereinafter, simply referred to as "the mower") will be described later in detail, the basic configuration described using Fig. 1 is applied thereto.

As illustrated in Fig. 2, this mower is provided with right-and-left front wheels 2a which are freely steerable, right-and-left rear wheels 2b which are driven, and a body frame 1. A cockpit 20 including an operator's seat 21 and a steering wheel 22 is disposed in a rear part of the body frame 1. A mower unit 6 is suspended between the front wheels 2a and the rear wheels 2b, via an elevator linkage mechanism 60 formed in the body frame 1 as a parallel link mechanism.

An engine 23 is disposed in a front part of the body frame 1, and a power transmission mechanism 24 for transmitting power of the engine 23 extends rearward from the engine 23. The power transmission mechanism 24 includes a power transmission mechanism for traveling (not illustrated) for transmitting the power to the rear wheels 2b, and a power transmission mechanism for operation (not illustrated) for transmitting the power to the mower unit 6. The traveling power transmission mechanism receives the power from an output shaft of the engine 23 which extends forward with respect to the body, and then transmits the power to the rear wheels 2b via a transmission device disposed below the operator's seat 21. The operation power transmission mechanism receives the power from the output shaft of the engine 23 which extends forward with respect to the body, and then transmits the power to a blade drive unit 65 disposed above a blade housing 7 of the mower unit 6. The mower travels while driving the mower unit 6 to perform a mowing operation for cutting turf and grass.

The elevator linkage mechanism 60 is provided with right-and-left front links 60a supported by the body frame 1 so as to be vertically swingable, right-and-left rear links 60b supported by the body frame 1 so as to be vertically swingable, and right-and-left interlocking links (not illustrated). Tip end parts of the right-and-left front links 60a is coupled to front brackets 61a located in a front part of the blade housing 7 of the mower unit 6. Tip end parts of the right and left rear links 60b are coupled to rear brackets 61b located in a rear part of the blade housing 7. Each of the front links 60a is coupled to the rear link 60b on the corresponding side, respectively, by the right-and-left interlocking links. The right-and-left front links 60a are interlockingly coupled to each other via a swing shaft (not illustrated) having one lateral axis. A lift cylinder 62 is interlocked with the left front link 60a. That is, the elevator linkage mechanism 60 is elevated and lowered vertically with respect to the body frame 1 as the front links 60a are swingably displaced by the lift cylinder 62. Thus, the mower unit 6 can be operated between a lowered operating state in which ground-contact gauge wheels 63 supported at front and rear sides of the blade housing 7 contact the ground surface and an elevated non-working state in which all the ground-contact gauge wheels 63 are elevated from the ground surface.

When the mower travels while the mower unit 6 being in the lowered operating state, and a blade unit 73 disposed inside the blade housing 7 of the mower unit 6 is driven to rotate, mowing of grass and/or turf is performed. Here, the cut grass is fed by air flow generated according to the driving of the blade unit 73 into a cut grass conveyance duct 8 through a discharge cover 64 located in an upper part of the blade housing 7. The cut grass conveyance duct 8 extends along the rear-front direction of the body between the right-and-left rear wheels 2b, and is connected with the grass container 5 disposed behind the body frame 1. Thereby, the cut grass mown inside the blade housing 7 is collected in the grass container 5.

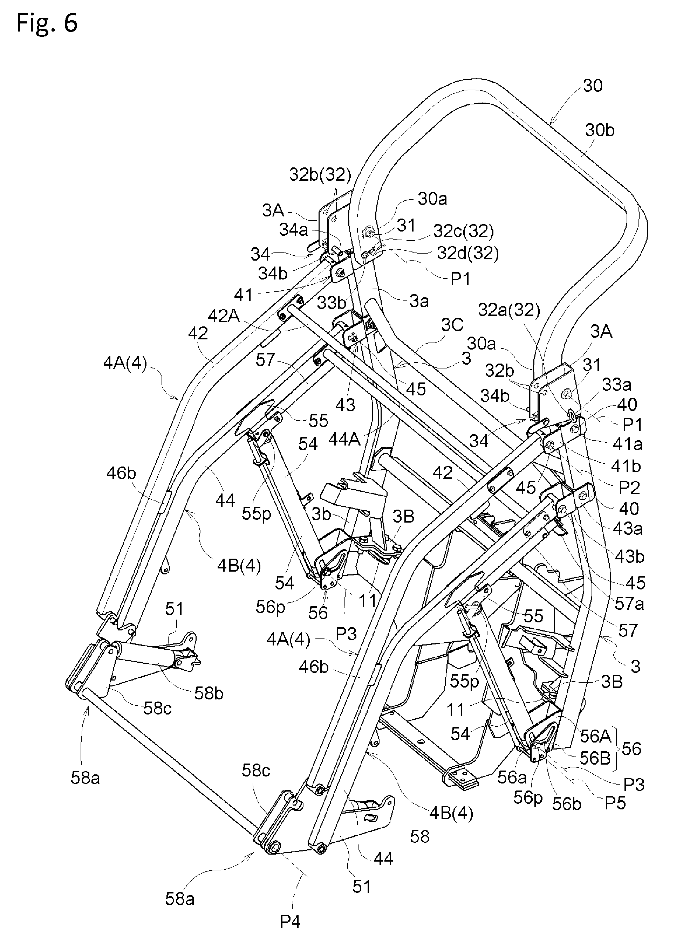

As illustrated in Figs. 3 to 6, the right-and-left pillars 3 are disposed immediately behind the operator's seat 21 at the left end and the right end of the body frame 1. Each pillar 3 is a pipe having a rectangular cross section, entirely extending upwardly, and is bent rearward approximately in the middle thereof at a bending angle of about 160°. A retaining bracket 3B is formed on the inner surface of the base end part 3b which is a lower end section of each pillar 3. Side bearers 11 are formed at locations corresponding to the retaining brackets 3B, projected respectively from the left end and the right end of the body frame 1 in the body lateral direction. A receiving surface is formed on an upper part of each side bearer 11, and a fixing surface formed in a lower part of the retaining bracket 3B is overlapped with the receiving surface, and they are coupled to each other with bolts. Thus, the right-and-left pillars 3 are fixed to both the right-and-left sides of the body frame 1 with high rigidity (see Figs. 1 and 6). The right-and-left pillars 3 are coupled to each other with a plurality of cross beams 3C extending in the body lateral direction.

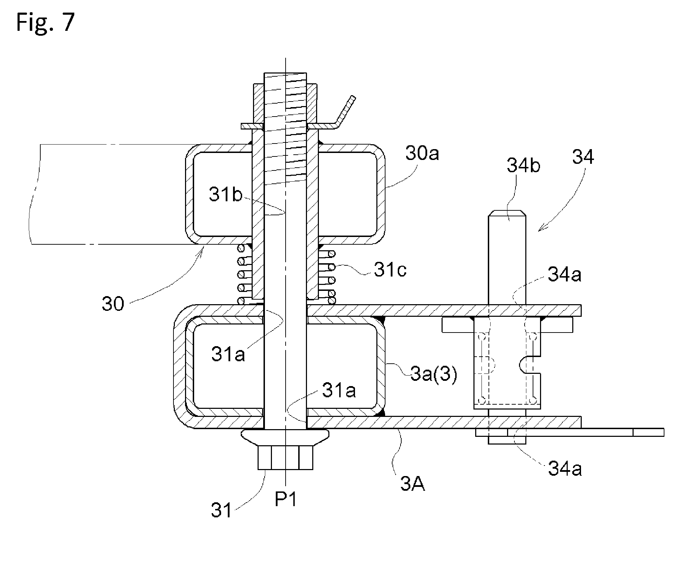

As clearly seen from Fig. 6, the coupling parts 3A coupling the upper unit 30 to the pillars 3 swingably about the lateral axis P1 is formed in free end parts 3a which are upper end sections of the pillars 3. As enlarged in Fig. 7, each coupling part 3A is comprised of a channel-shaped member so that it surrounds three sides of the free end part 3a of the pillar 3 which is the square pipe having a rectangular cross section, and is welded to the free end part 3a. The swing structure of the upper unit 30 with respect to the pillar 3 is realized by coaxially forming through-holes having the lateral axis P1 in the right-and-left coupling parts 3A and both the free end parts 30a of the upper unit 30, and attaching swing shafts 31 to the through-holes. Note that in this embodiment, a spring 31c (see Fig. 7) surrounds each swing shaft 31 so that frictional force acts between the pillar 3 and the upper unit 30. That is, this spring 31c functions as a swing control implement for suppressing the free swing of the upper unit 30 by the frictional force.

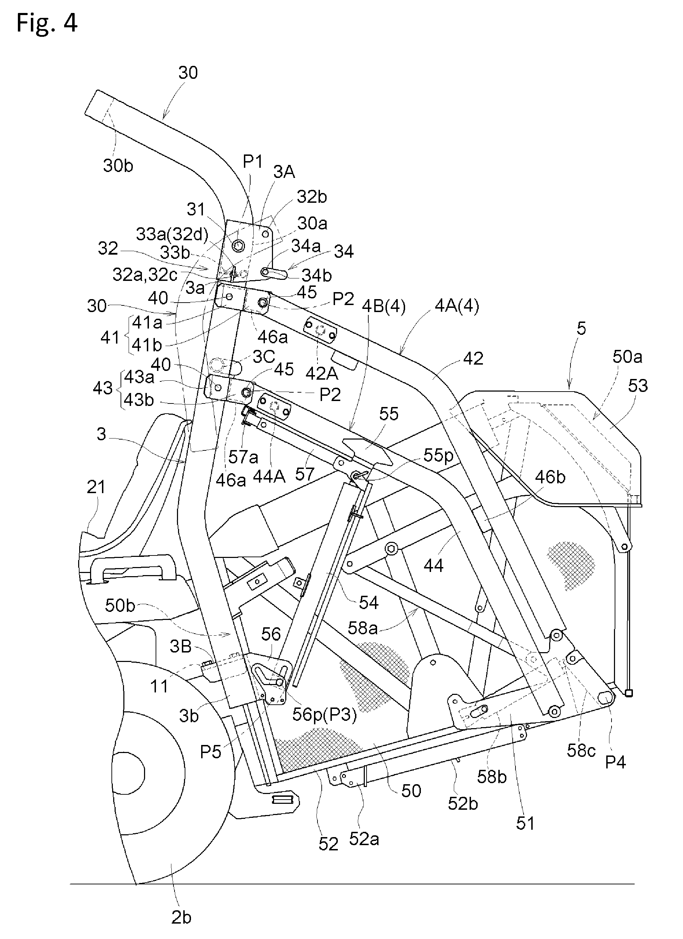

As clearly seen from Fig. 6, the upper unit 30 is a substantially U-like shape frame having the similar cross-sectional shape to the pillars 3, and its free end parts 30a on both sides are linear, but the upper unit 30 is bent above the linear parts at about 90° and extends forward. That is, the inverted U-shaped frame 30 has a shape which is bent at the leg parts (bent forward in the mounted posture). According to this shape, a top part 30b of the upper unit 30, which is most distant from the swing axis P1, reaches above the operator's head sitting on the operator's seat 21 at the swung position of the upper unit 30 where the free end parts 30a on both sides substantially overlap with the free end parts 3a of the pillars 3 (illustrated by solid lines in Fig. 4). In this embodiment, this swung position is referred to as "the extended swung position." From such a position, the operator's seat 21 is moved forward and the upper unit 30 is swung from forward to rearward, the upper unit 30 reaches the swung position where the top part 30b is located behind the operator's seat 21 (illustrated by dashed dotted lines in Fig. 4). In this embodiment, this swung position is referred to as "the retracted swung position." In other words, the top part 30b of the upper unit 30 is positioned above the swing axis P1 when the upper unit 30 is positioned at the extended swung position. The top part 30b of the upper unit 30 is positioned below the swing axis P1 when the upper unit 30 is positioned at the retracted swung position.

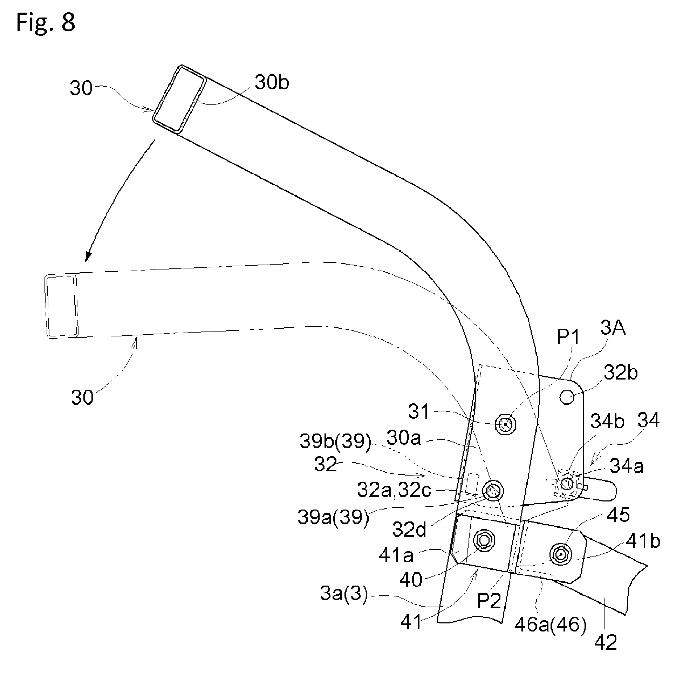

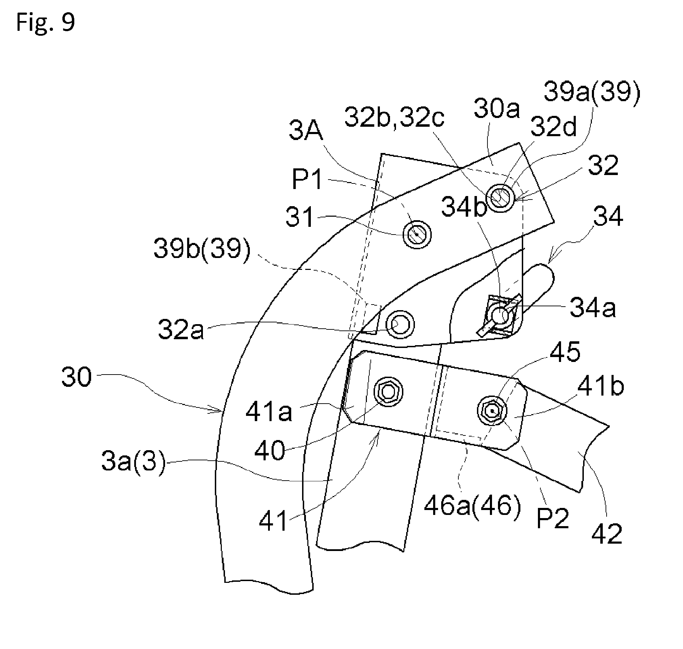

As illustrated in Figs. 6 to 9, the lock device 32 for locking the upper unit 30 at the extended swung position and the retracted swung position described above is formed between each coupling part 3A and the upper unit 30. The lock device 32 adopts a lock-pin lock-hole structure where a first lock hole 32a and a second lock hole 32b are formed in each coupling part 3A, and a third lock hole 32c is further formed in each free end part 3a of the upper unit 30 at a location toward the end part side from the location of the lateral axis P1. The spatial relationship of the lock holes is set so that the first lock hole 32a is located coaxially with the third lock hole 32c at the extended swung position (see Fig. 8), and the second lock hole 32b is located coaxially with the third lock hole 32c at the retracted swung position (see Fig. 9). Therefore, the upper unit 30 is locked at the extended swung position by inserting the lock pins 32d into the first lock holes 32a and the third lock holes 32c at the extended swung position. On the other hand, the upper unit 30 is locked at the retracted swung position by inserting the lock pins 32d into the second lock holes 32b and the third lock holes 32c at the retracted swung position. Although only schematically illustrated in Fig. 6, one end of the lock pin 32d is provided with a ring-shaped grip 33a for easier extracting operation of the pin 32d, and the other end of the lock pin 32d is provided with a retainer pin 33b for fall-off prevention of the pin 32d.

Further in this embodiment, as seen clearly from Figs. 6 and 7, reserve stoppers 34 are provided to prevent the upper unit 30 at the extended swung position from swinging forward even after the lock pins 32d are pulled out (unlocked state). Each reserve stopper 34 is comprised of a stopper pin 34b which is inserted into a through-hole 34a formed in the extended portion of the coupling part 3A, and a tip end thereof projects to a swing locus area of the upper unit 30. That is, if the stopper pins 34b are inserted after returning the upper unit 30 back to the extended swung position, a downward swing of the upper unit 30 can be prevented even in the unlocked state of the lock devices 32 because the tip ends of the stopper pins 34b contact the upper unit 30. Note that, although not illustrated in the drawings because it is a well-known structure, if the spring force is configured to act in the inserting direction of the stopper pin 34b, the stopper pin 34b is configured to be pulled out against the spring force, and the stopper pin 34b is configured to always remain inside the coupling part 3A, the stopper pin 34b will not be lost.

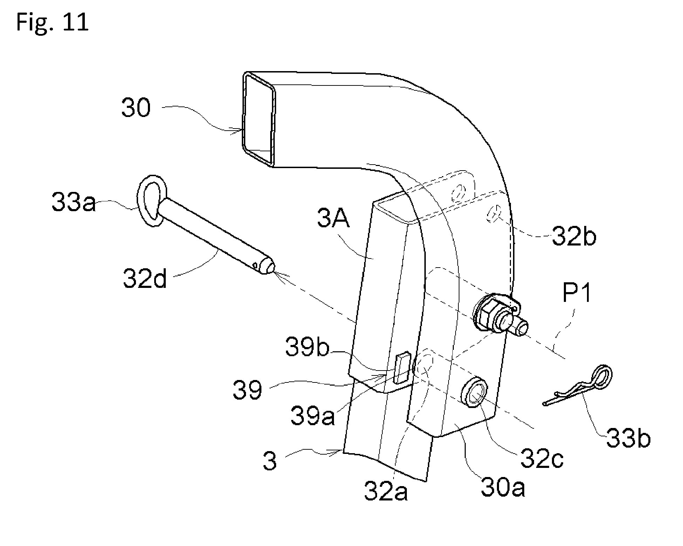

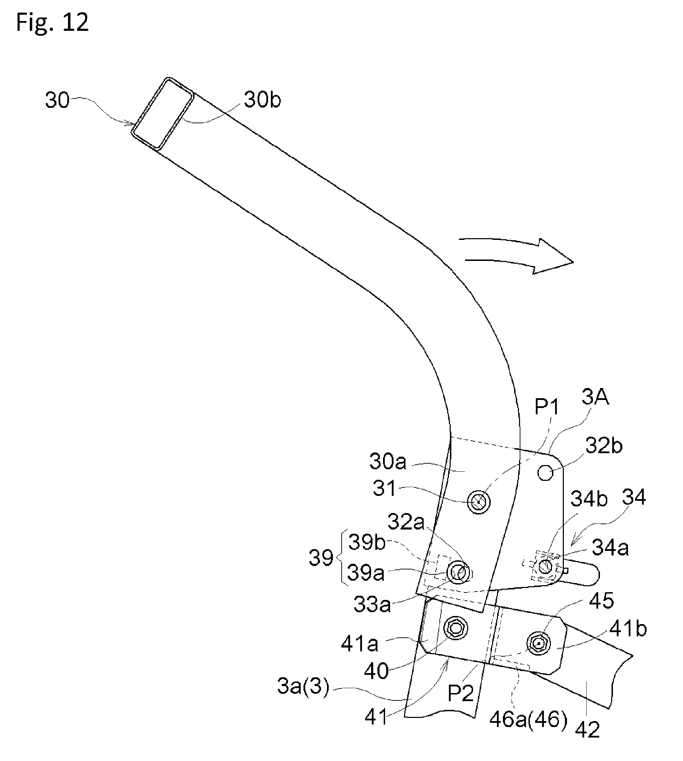

As described above, the upper unit 30 is locked by the lock devices 32 at the extended swung position and the retracted swung position. Further, in the unlocked state of the lock devices 32, the swing from the extended swung position to the retracted swung position is prevented by the reserve stoppers 34, and the swing will not be arrowed unless the reserve stoppers 34 are disengaged. A reverse rotation preventing mechanism 39 is provided between each pillar 3 (coupling part 3A) and the upper unit 30. The reverse rotation preventing mechanism 39 has a function for preventing that the upper unit 30 at the extended swung position swings in the opposite direction from the swing direction from the extended swung position to the retracted swung position. As clearly seen from Figs. 11 and 12, each reverse rotation preventing mechanism 39 in this embodiment is comprised of a collar member 39a and a stopper member 39b. The collar member 39a has a through-hole through which the lock pin 32d is inserted, is disposed between the coupling part 3A and the upper unit 30, and is fixed to the upper unit 30. Each stopper members 39b is fixed to the coupling part 3A at a position where the swing of the upper unit 30 is prevented by contacting the collar member 39a when the upper unit 30 swings in the opposite direction from the swing direction from the extended swung position to the retracted swung position. Of course, the collar members 39a may be fixed to the coupling parts 3A, and the stopper members 39b may be fixed to the upper unit 30. As for the reverse rotation preventing mechanism 39, a simple configuration in which the stopper members 39b are located within the swing locus of the upper unit 30 in the opposite direction from the extended swung position, and is disposed so as to prevent the swing of the upper unit 30, may be adopted.

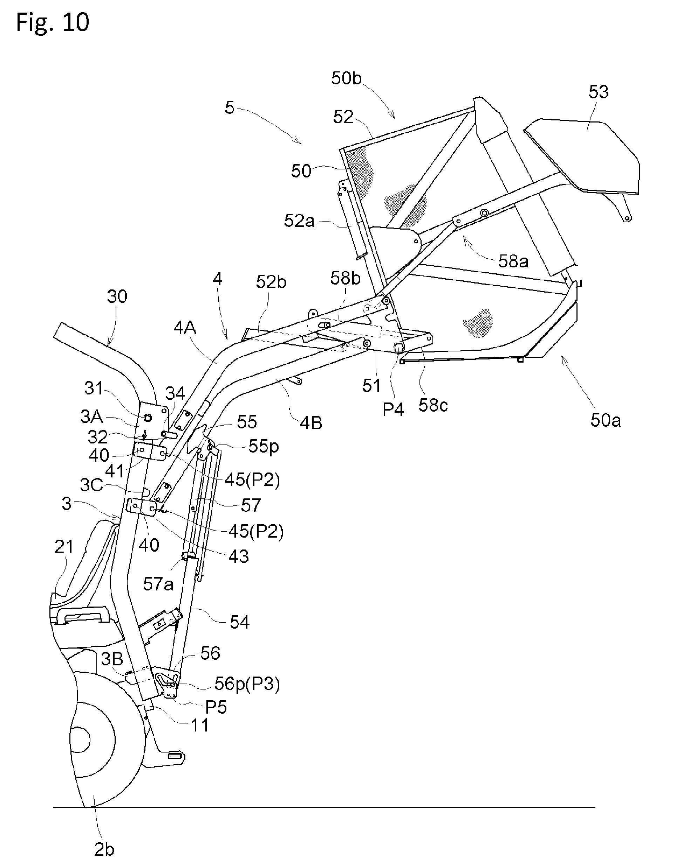

As illustrated in Fig. 4, the linkage mechanism 4 formed as the four parallel linkage mechanism is detachably mounted in the upper parts of the right-and-left pillars 3, and the grass container 5 is supported by the linkage mechanism 4. Each linkage mechanism 4 couples an upper end part of the pillar 3 to a bottom end part of the grass container 5 on the rear end side. The hydraulic elevator cylinder 54 is disposed as a piston cylinder for elevating each linkage mechanism 4 so that the hydraulic elevator cylinders 54 extend both right-and-left sides of the grass container 5. A right-and-left dumping cylinders 58b each comprised of a hydraulic cylinder is disposed below the grass container 5 on the rear end side. Further, dumping linkage mechanism 58a are disposed at both sides of the grass container 5, which interlock with the dumping cylinders 58b and turn the grass container 5 upside down by the telescopic motion of the dumping cylinders 58b. Fig. 10 illustrates the linkage mechanism 4 which is elevated, and the grass container 5 in the grass discharging posture.

As understood from Figs. 4 and 6, the linkage mechanism 4 includes an upper link 4A, a lower link 4B, and a container-side link 51 at right and left sides of the mower. The container-side link 51 functions as a coupling link which couples the upper link 4A to the lower link 4B with a predetermined gap, and also functions as a container bracket of the grass container 5, which is a rear end frame of the grass container 5.

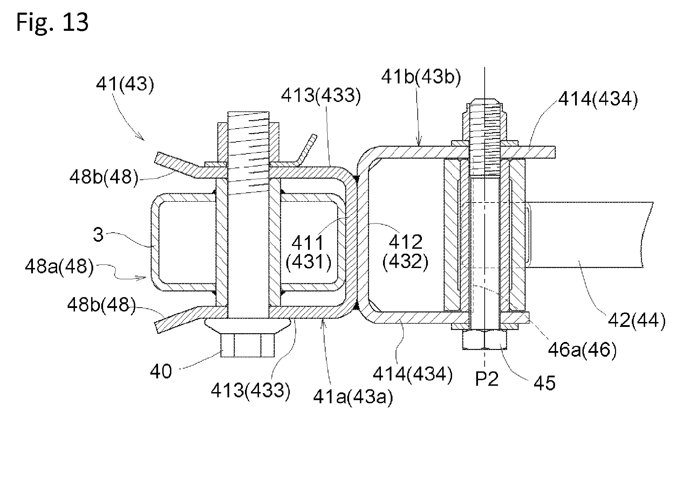

As illustrated in Fig. 6, the upper link 4A is comprised of the upper mounting bracket 41 and the upper link main body 42, and the lower link 4B is comprised of the lower mounting bracket 43 and the lower link main body 44. In this embodiment, the right-and-left upper link main bodies 42 are coupled to each other by a coupling member 42A, and the right-and-left lower link main bodies 44 are coupled to each other by a coupling member 44A; however, the coupling member 42A and the coupling member 44A can be omitted. As well understood from Fig. 11, each upper mounting bracket 41 is provided with a mounting part 41a and a swing fulcrum part 41b, and each lower mounting bracket 43 is provided with a mounting part 43a and a swing fulcrum part 43b. As illustrated in Fig. 13, the mounting part 41a and the swing fulcrum part 41b are members having U-shaped cross sections comprised of bottom plates 411 and 412, and side plates 413 and 414 which stand from both ends of the bottom plates 411 and 412, respectively, and the bottom plates 411 and 412 are joined to each other by welding, etc. Similarly, the mounting part 43a and the swing fulcrum part 43b are members having U-shaped cross sections comprised of bottom plates 431 and 432, and side plates 433 and 434 which stand from both ends of the bottom plates 431 and 432, respectively, and the bottom plates 431 and 432 are joined to each other by welding, etc. The mounting parts 41a and 43a are detachably mounted to the pillar 3, and the swing fulcrum parts 41b and 43b are swingably coupled to the corresponding link main bodies (the upper link main bodies 42 or the lower link main bodies 44).

Since the upper mounting bracket 41 and the lower mounting bracket 43 have substantially the same shape, although the upper mounting bracket 41 represents the brackets in the following detailed description, this description can also be applied to the lower mounting bracket 43. A through-hole having a common link swing axis P2 is formed in the side plate 414 of the swing fulcrum part 41b and the upper link main body 42, and a link pin 45 is inserted into the through-hole. Receiving guide surfaces 48b which are tip end sections of the right-and-left side plates 413 of the mounting part 41a open outwardly, and they function as mounting guides 48 by which each pillar 3 enters between the side plates 413. When mounting the linkage mechanism 4 together with the grass container 5, each mounting part 41a is inserted into the pillar 3 so that a rear surface of the pillar 3 contacts the bottom plate 431 of the mounting part 41a. Each mounting part 43a is fixed to the pillar 3 by inserting the securing pin 40 into the through-hole formed in the pillar 3 and the through-hole formed in the side plates 433, which are aligned coaxially in such a state.

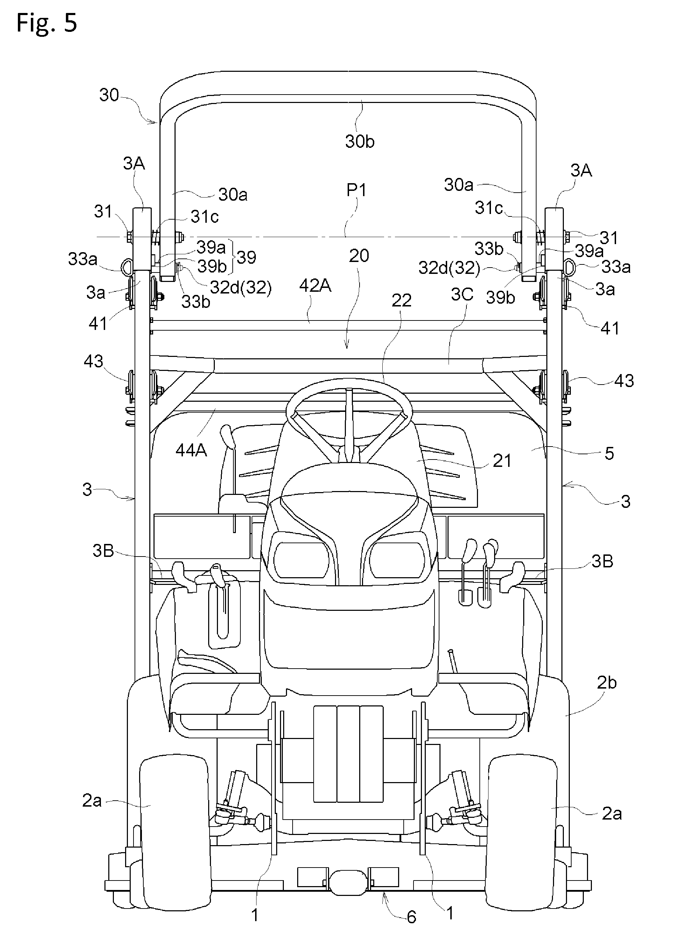

As clearly seen from Figs. 5 and 6, the spatial relationship between each pillar 3, and the corresponding upper link 4A and the corresponding lower link 4B in the plan view is such that the center of the pillar 3 with respect to the body lateral direction is aligned or substantially aligned with the center of the upper link 4A and the lower link 4B. Describing in more detail, in this embodiment, the longitudinally-extending center line of the upper mounting bracket 41 is aligned with the longitudinally-extending center line of the upper link main body 42, and the longitudinally-extending center lines intersects with a longitudinally-extending center line of the pillar 3. Similarly, the longitudinally-extending center line of the lower mounting bracket 43 is aligned with the longitudinally-extending center line of the lower link main body 44, and the longitudinally-extending center lines intersect with the longitudinally-extending center line of the pillar 3. With such a configuration, the widths of the upper link main body 42 and the lower link main body 44 in the body lateral direction fall within the width of the pillar 3 in the body lateral direction in the plan view.

As described above, the upper mounting bracket 41 rotates about the link swing axis P2 with respect to the upper link main body 42. For this reason, when a mower travels rearward toward the linkage mechanism 4 in the grass container 5 in the independently standing state, and the pillars 3 are inserted into the mounting parts 43a, it is important to appropriately maintain the posture of the mounting parts 41a so that the U-shaped openings of the mounting parts 41a oppose to the pillars 3. In order to realize this appropriate posture of the mounting parts 41a against the pillars 3, the postures of the upper link main bodies 42 and the lower link main bodies 44 in the grass container 5 in the independently standing state, the postures of the upper mounting brackets 41 against the upper link main bodies 42, and the postures of the lower mounting brackets 43 against the lower link main bodies 44 must be maintained within a tolerable range. A member for maintaining such a mounting posture is referred to as "the posture maintaining mechanism 46." In this embodiment, as illustrated in Fig. 4, swing prevention members 46a formed from plate members (stopper plates) are provided in lower surfaces of the swing fulcrum parts 41b and 43b to prohibit the swing of the upper mounting brackets 41 and the lower mounting brackets 43 below predetermined positions about the link swing axes P2. In detail, as understood from Fig. 4, an end face of the swing prevention member 46a which is formed from the plate member on the upper link main body 42 (lower link main body 44) side contacts an end face (bottom wall end face of the square pipe) of the upper link main body 42 (lower link main body 44) to prohibit the swing of the upper mounting bracket 41 (lower mounting bracket 43), and the upper mounting bracket 41 (lower mounting bracket 43) is maintained in a predetermined mounted posture. Of course, the swing prevention members 46a may be provided in lower surfaces of body side end parts of the upper link main body 42 and the lower link main body 44. Such a swing prevention member 46a is one form of the posture maintaining mechanism 46 in the preferred embodiment. Further, in a state before mounting the pillar 3 to the linkage mechanism 4, the upper link main body 42 and the lower link main body 44 must also maintain their swing postures with respect to the container-side link 51 within a tolerable range. The posture maintaining mechanism 46 for maintaining this swing postures will be described later.

As clearly seen from Figs. 4 and 6, and Fig. 14 which is an enlarged view, the right-and-left elevator cylinders 54 swing to elevate and lower the linkage mechanism 4, and each cylinder 54 couples the lower link main body 44 to a base end part 3b of the pillar 3. Specifically, a tip end of a piston of the elevator cylinder 54 is swingably coupled to a first cylinder bracket 55 fixed to the lower link main body 44 via a first support pin 55p. A cylinder end of the elevator cylinder 54 is swingably coupled to a second cylinder bracket 56 fixed to the base end part 3b of the pillar 3 via a second support pin 56p. When the linkage mechanism 4 is removed from the pillar 3 and the grass container 5 is removed from the body frame 1, the elevator cylinder 54 is swung about the second support pin 56p toward the pillar 3 and is held at a rear part of the body frame 1 by removing the first support pin 55p. Since the hydraulic piping of the elevator cylinders 54 are fixed the body frame 1 side, it is not necessary to remove the hydraulic piping from the elevator cylinders 54 when swinging and storing the elevator cylinder 54. Note that a service port block of various hydraulic piping are disposed in rear part area of the body frame 1, for example, on the cross beams of the pillars 3, and, more specifically, in a plane of a cross plate.

A tension rod 57 is swingably provided to each first cylinder bracket 55 about a lateral axis. The tension rod 57 is configured so that, when the piston of the elevator cylinder 54 extends to the maximum, the tension rod 57 swings its tip end downwardly to stop the cylinder end of the elevator cylinder 54, thereby preventing a descent of the piston. In any other cases, the tension rod 57 is swung into a retracted posture in which the tension rod 57 is swung to be oriented along a lower surface of the lower link main body 44, and is held in the posture after the tip end is stopped by a holder provided to the lower link main body 44.

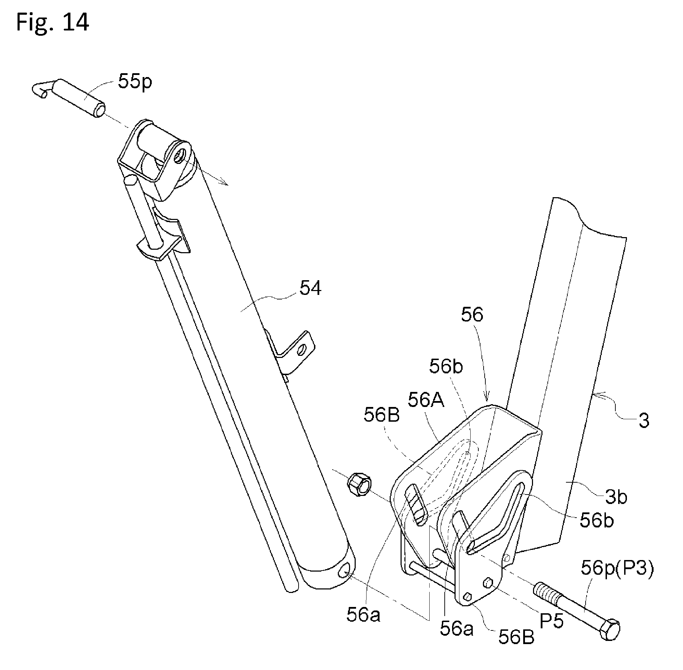

As clearly seen from Fig. 14, the second cylinder bracket 56 has a U-shaped cross section, and is comprised of an inner bracket 56A accepts the cylinder end of the elevator cylinder 54 within an interior space thereof, and outer brackets 56B swingably attached to both side surfaces of the inner bracket 56A about a swing axis P5. A bottom plate of the inner bracket 56A is fixed to the base end part 3b of the pillar 3, and elongated holes 56a through which the second support pin 56p is inserted are formed in the right-and-left side plates standing from edges of the bottom plate of the inner bracket 56A. Each elongated hole 56a is a linear elongated hole extending in the axial direction of the mounted elevator cylinder 54. A substantially C-shaped cam hole 56b is formed in each outer bracket 56B. That is, each cam hole 56b is comprised of a first elongated hole part and a second elongated hole part which are joined together with a certain angle. The first elongated hole part is a curved hole extending along the circumference line of a swing axis P3, and the other elongated hole is a linear hole. At an installation swung position of the outer brackets 56B, the second support pin 56p is located at the end of the curved hole, and the second support pin 56p is held in the curved hole by collaborating with the elongated holes 56a of the inner bracket 56A. From this state, the outer brackets 56B are rotated around the swing pin having the swing axis P5 provided below the cam holes 56b until the second support pin 56p reaches the linear hole. Thereby, the linear holes of the outer brackets 56B overlap with the elongated holes 56a of the inner bracket 56A, and the second support pin 56p becomes movable along the linear hole. When the linkage mechanism 4 are removed from the pillars 3, the elevator cylinders 54 is stored behind the pillars 3 after the couplings of the first support pins 55p are canceled and the elevator cylinders 54 are swung toward the pillars 3 about the second support pins 56p. When canceling the coupling of the first support pin 55p, the elevator cylinder 54 and the first cylinder bracket 55 may be adhered to each other via the first support pin 55p. In such a case, it becomes difficult to remove the first support pin 55p. In this embodiment, since the second support pin 56p becomes movable along the linear hole by the rotation of the outer brackets 56B described above, it becomes easier to remove the first support pin 55p by moving the second support pin 56p in a direction to release the force acting on the first support pin 55p, i.e., by moving the elevator cylinder 54 along the linear hole. That is, this cam hole 56b functions as a releasing guide hole which can displace the second support pin 56p inserted therein, and release the force acting on the second support pin 56p.

When the piston of the elevator cylinder 54 expands and contracts, the linkage mechanism 4 is swung and displaced upwardly and downwardly with respect to the pillar 3, respectively. Thus, the grass container 5 is elevated and lowered between a lowered collecting position (see Fig. 4) at which the grass container 5 is lowered to a rear location of the rear end part of the cut grass conveyance duct 8, and an elevated discharging position (see Fig. 10) at which the grass container 5 is elevated to a rear upper location of the rear end part of the cut grass conveyance duct 8.

The grass container 5 is comprised of a container main body 50 and a container frame 52 which increases the rigidity of the container main body 50. A core member of the container frame 52 is comprised of container brackets which can substantially support the container main body 50 and also functions as the container-side links 51. Therefore, the container brackets are coupled as the container-side links 51 of the linkage mechanism 4 to the lower link main bodies 44 and the upper link main bodies 42 at respective swing fulcrums.

A lid 53 which opens and closes the cut grass discharging port 50a located on the rear end side of the container main body 50 is provided to the grass container 5. The grass container 5 transits to the elevated discharging posture as illustrated in Fig. 10 from the lowered collecting posture as illustrated in Fig. 4 by swing about a swing axis P4. In the elevated discharging posture, the cut grass discharging port 50a is oriented downward, and the cut grass collecting port 50b located on the front end side of the container main body 50 is oriented upward. In the lowered collecting posture, the cut grass collecting port 50b is oriented forward with respect to the body, and the cut grass discharging port 50a is oriented rearward with respect to the body.

In this embodiment, the right-and-left dumping cylinders 58b are provided. The dumping cylinders 58b are coupled to a right-and-left dumping arms 58c swingably provided about the swing axis P4 of a coupling rod which couples the dumping arms 58c. When the dumping arms 58c are swung about the swing axis P4, the grass container 5 also swings about the swing axis P4, and the grass container 5 can be switched between the elevated discharging posture and the lowered collecting posture because of the action of the right-and-left dumping linkage mechanism 58a. Although the dumping linkage mechanism 58a couple the frame member of the lid 53, the container frame 52, and the container brackets (container-side links 51) at the swing fulcrums, since this is a well-known structure, detailed description thereof is omitted herein.

Fig. 10 is a side view of the grass container 5 in the cut grass discharging state. As illustrated in Fig. 10, when the elevator cylinders 54 are extended, the linkage mechanism 4 are swung upwardly and the grass container 5 is elevated to the elevated discharging position. Further, by extending the dumping cylinders 58b, the dumping arms 58c are swung rearward, and the posture of the grass container 5 is transited to the elevated discharging posture. At this time, because of the link action of the right-and-left dumping linkage mechanism 58a, the lid 53 is switched to an open state, and the cut grass discharging port 50a becomes in an open state. As a result, the cut grass stored in the cut grass container 5 is dropped and discharged from the grass discharging port 50a. From the above state, by a reverse motion, the grass container 5 and the linkage mechanism 4 return to the postures illustrated in Fig. 2, and the cut grass collecting port 50b of the cut grass container 5 is aligned with the rear end part of the cut grass conveyance duct 8 to communicate with the cut grass conveyance duct 8. Thereby, the cut grass fed from the cut grass discharge duct 27 of the mower unit 6 via the cut grass conveyance duct 8 flows into the grass container 5 through the cuts grass collecting port 50b, and is collected into the grass container 5.

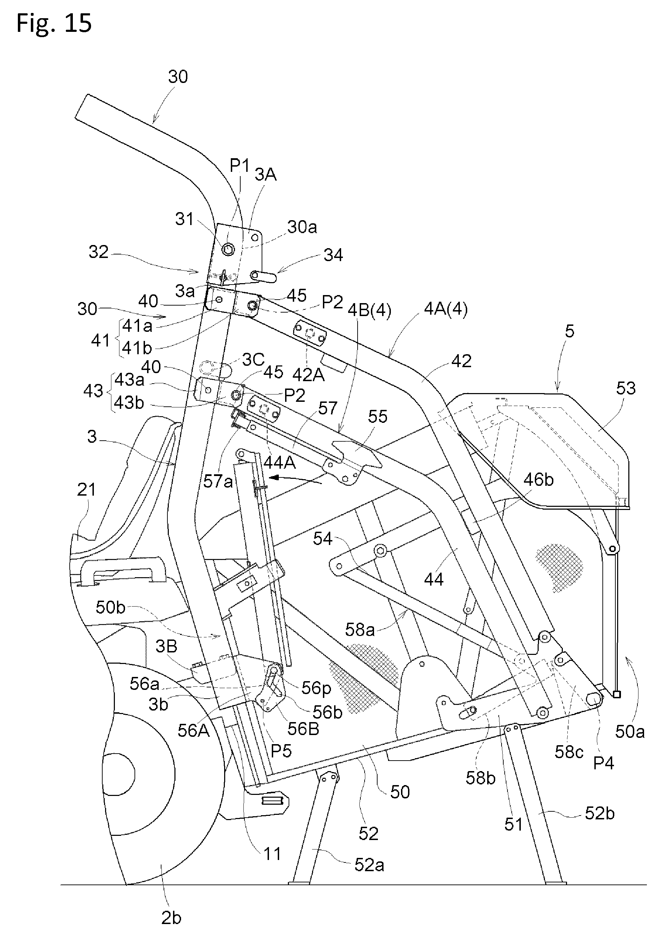

As illustrated in Fig. 15, the grass container 5 can stand alone on the ground surface by deploying right-and-left front stands 52a folded into a lower front part of the container main body 50 of the grass container 5, and right-and-left rear stands 52b folded into a lower rear part of the container main body 50. In this stand-alone posture, as described above, when the elevator cylinders 54 are stored on the rear surfaces of the pillars 3, and the tension rods 57 are coupled between the container brackets (container-side links 51) and the lower link main bodies 44, the upper mounting brackets 41 and the lower mounting brackets 43 obtain postures and positions suitable for mounting to the pillars 3.

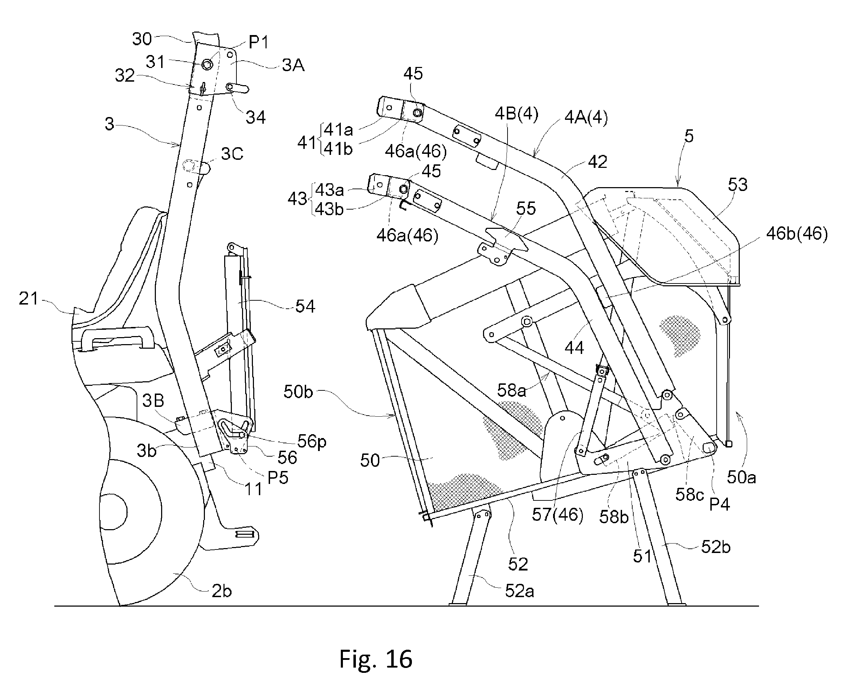

Further, from such a state, as clearly seen from Fig. 16, the tension rods 57 are removed from predetermined locations where the tension rods 57 are held by the lower link main bodies 44, and one ends of the tension rods 57 are attached to the lower link main bodies 44 and the other ends are attached to the container brackets (container-side links 51). Thereby, the lower link main bodies 44 can maintain predetermined postures with respect to the container brackets (container-side links 51). The predetermined postures are appropriate postures for mounting the linkage mechanism 4 to the pillars 3, and, therefore, the tension rods 57 function as a member of each posture maintaining mechanism 46. Spacers 46b are each provided between the lower link main body 44 and the upper link main body 42. The spacer 46b creates a predetermined gap between the lower link main body 44 and the upper link main body 42 of which postures are maintained by the tension rod 57. The predetermined gap creates the appropriate posture of the upper link main body 42 when mounting to the pillar 3 of the linkage mechanism 4. Therefore, the spacers 46b also functions as a member of each posture maintaining mechanism 46.

From the state illustrated in Fig. 16, in order to mount the linkage mechanism 4 including the grass container 5 to the pillars 3, the mower is reversed to a location where the upper mounting brackets 41 and the lower mounting brackets 43 can be mounted to the pillars 3. Then, in a state where the mounting parts 41a of the upper mounting brackets 41 and the mounting parts 43a of the lower mounting brackets 43 are fitted into the pillars 3, the securing pins 40 are inserted to complete the coupling of the upper links 4A and the lower links 4B to the pillars 3. Further, the elevator cylinders 54 are swung from their storage positions behind the pillars 3, and their piston tip ends are coupled to the first cylinder brackets 55 using the first support pins 55p. Thereby, the coupling of the linkage mechanism 4 to the pillars 3 is completed. When elevator cylinders 54 are expanded, the grass container 5 is elevated, and since the front stands 52a and the rear stands 52b are lifted from the ground surface, the front stands 52a and the rear stands 52b can be folded.

### Other Embodiments

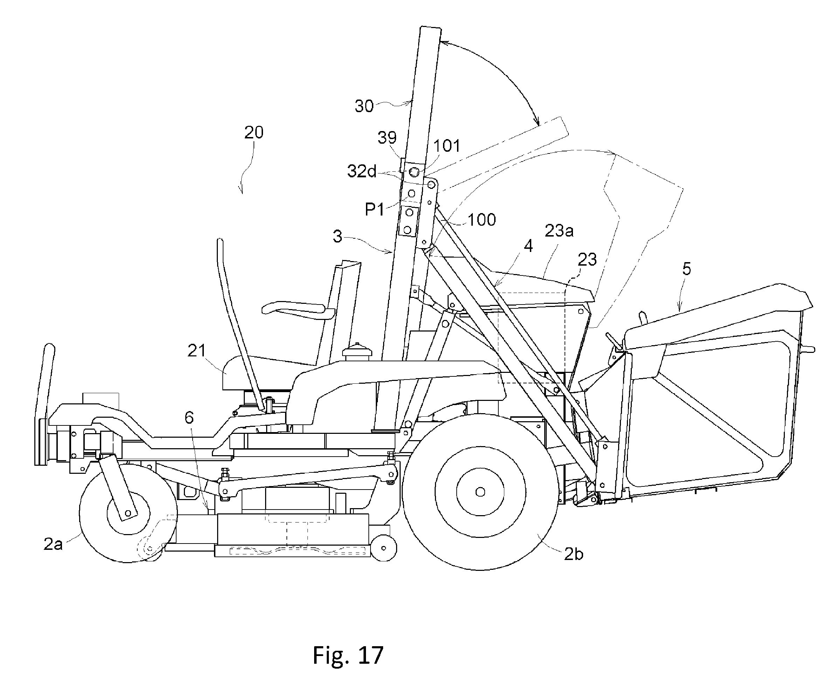

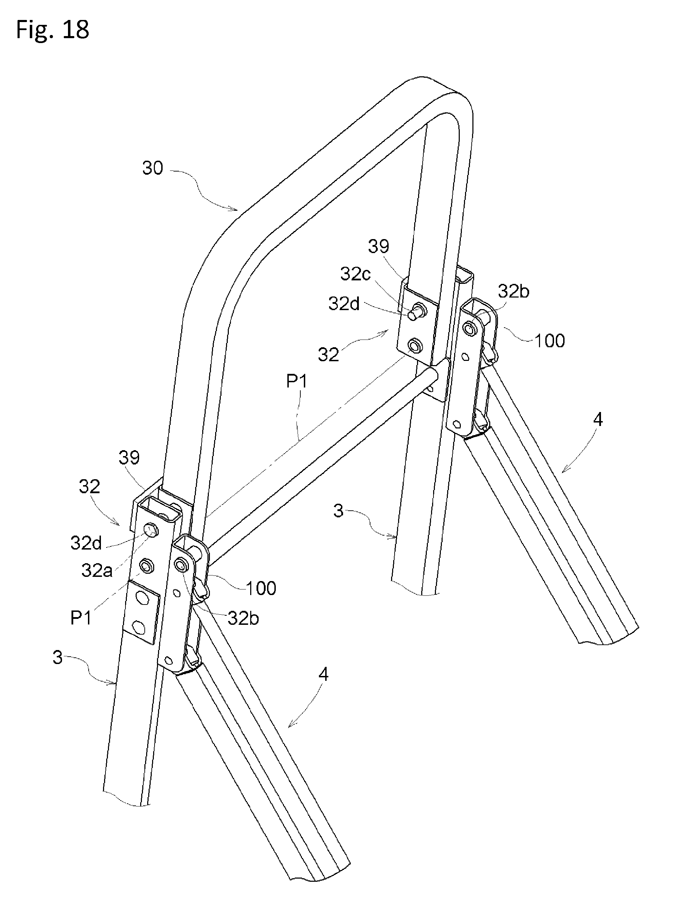

The riding-type mower according to the preferred embodiment of the present invention is configured such that the engine 23 is disposed in the front part of the body frame 1 and the operator's seat 21 is disposed in the rear part, while the mower unit 6 is disposed between the front wheels 2a and the rear wheels 2b. Of course, the preferred embodiment is also applicable to other types of a riding-type mower. For example, Figs. 17 and 18 illustrate a riding-type mower according to another preferred embodiment of the present invention. The riding-type mower is generally referred to as a "zero-turn mower." In this riding-type mower, the engine 23 is disposed behind the operator's seat 21, and a right-and-left steering rods 20 are provided instead of the steering wheel 22. The pillars 3 are disposed behind the operator's seat 21 similar to the previous embodiment. The upper unit 30 is swingably mounted to upper parts of the pillars 3 about the lateral axis P1 so that it is located between the inside side faces of the right-and-left pillars 3. In the example illustrated in Figs. 17 and 18, a coupling body 100 which serves as both of the upper mounting bracket 41 and the lower mounting bracket 43, i.e., the coupling body 100 which is coupled to both the upper link 4A and the lower link 4B, is attached to a rear surface of the upper part of each pillar 3. Of course, similar to the embodiment described above, a configuration in which the upper link 4A and the lower link 4B are separately coupled to the pillar 3 using the upper mounting bracket 41 and the lower mounting bracket 43, may be adopted. Since the linkage mechanism 4 is simple in the structure, the upper link 4A and the lower link 4B are integrated by the coupling body 100, and the coupling body 100 serves as both of the upper mounting bracket 41 and the lower mounting bracket 43.

As understood from Fig. 18, the upper unit 30 of this embodiment has a simple gate shape which is formed by bending a single square pipe at two places in the same direction about 90°. The upper unit 30 is located much higher than the head of the operator who sits on the operator's seat so that the leg sections of the upper unit 30 and the pillars 3 draw substantially straight lines (an extended swung position), and this posture is a normal posture of the upper unit 30 when the mower travels (illustrated by solid lines in Fig. 17). The upper unit 30 can be transited into a retracted swung position for avoiding interferes of the upper unit 30 with trees, beams of a barn, etc. by swinging the upper unit 30 rearward above the engine 23. The retracted swung position is set so that the upper unit 30 does not barely interfere with an engine hood 23a covering the engine 23 from above even if the hood 23a is opened and closed, and the gap between the upper unit 30 and the hood 23a is set minimum (illustrated by dashed dotted lines in Fig. 17). The locking devices 32 for locking the upper unit 30 at the extended swung position and the retracted swung position are similar to those of the previous embodiment, and adopt the lock-pin lock-hole structure. As illustrated in Fig. 18, in each lock device 32, a first lock hole 32a is formed in the pillar 3, a second lock hole 32b is formed in the coupling body 100, and a third lock hole 32c is formed in the upper unit 30. The spatial relationship of the lock holes is set so that the first lock hole 32a is located coaxially with the third lock hole 32c at the extended swung position and the second lock hole 32b is located coaxially with the third lock hole 32c at the retracted swung position. Therefore, the upper unit 30 is locked at the extended swung position by inserting the lock pins 32d into the first lock holes 32a and the third lock holes 32c at the extended swung position. On the other hand, the upper unit 30 is locked at the retracted swung position by inserting the lock pins 32d into the second lock holes 32b and the third lock holes 32c at the retracted swung position. Further, as illustrated in Fig. 18, stopper members extending over the front surfaces of the pillars 3 and the front surface of the upper unit 30 are provided as the reverse rotation preventing mechanism 39. The stopper members are fixed to the pillars 3, and prevent the swing of the upper unit 30 in the opposite direction from the swing direction from the extended swung position to the retracted swung position by the contact of the stopper members and the upper unit 30. Of course, such stopper members may be fixed to the upper unit 30, the swing of the upper unit 30 in the opposite direction from the swing direction from the extended swung position to the retracted swung position may be prevented by the contact of the stopper members and the pillars 3, and other mechanism may also be adopted. Further, although not illustrated herein, the reserve stoppers 34 may also be provided in this embodiment.

The various features according to the preferred embodiment of the present invention are entirely or partially applicable not only to the riding-type mower described above, but also applicable to other mowers. For example, the features are also applicable to a so-called front-mounted mower in which the mower unit 6 is disposed forward of the front wheels. Further, also for the linkage mechanism 4, the preferred embodiment is applicable to any other mowers provided with any kinds of linkage mechanism 4 as far as they include the upper links 4A and lower links 4B. Typical linkage mechanism 4 include high-dumping linkage mechanism as illustrated in Fig. 10 in which the grass container 5 is elevated high above the operator's seat 21, low-dumping linkage mechanism in which the grass container 5 is elevated to the same height as the operator's seat 21, reversal elevator linkage mechanism in which the grass container 5 is elevated while being reversed, horizontal elevator linkage mechanism in which the grass container 5 is elevated while being translated without changing the posture of the grass container 5, etc.

### Modifications to Various Components

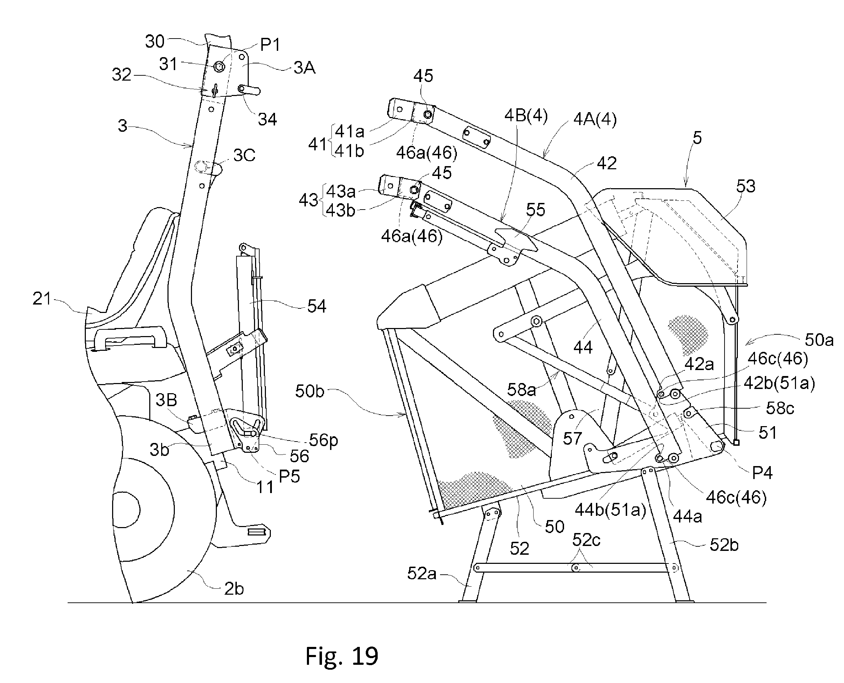

(1) In the embodiments described above, as seen clearly from Fig. 5 and other drawings, the shape and dimensions of the upper unit 30 are designed so that the maximum width of the swing locus of the upper unit 30 in the body lateral direction, i.e., the swing locus about the lateral axis P1 of the upper unit 30, becomes narrower than the distance between the right-and-left pillars 3. Alternatively, the shape and dimensions of the upper unit 30 may be designed so that the width of the swing locus in the body lateral direction of only the sections of the upper unit 30 opposing to the coupling parts 3A (i.e., free end parts 30a) and the tip end sections of the upper unit 30 (i.e., parts away from the lateral axis PI) become narrower than the distance between the right-and-left pillars 3. That is, even when the upper unit 30 has bulged parts which bulge outwardly in the body lateral direction between the free end parts 30a and the top part 30b, since the top part 30b as the tip end of the upper unit 30 can pass between the right-and-left pillars 3, the retracted swung position can be selected in order to effectively use the space.
(2) In the embodiments described above, although the pillars 3 and the upper unit 30 are manufactured from square pipes having rectangular cross sections, they may be manufactured from pipes having other cross sections or other profile materials. Further, the pillars 3 and the upper unit 30 may be manufactured from members having different cross-sectional shapes and/or different materials.
(3) In the embodiments described above, although the stands for allowing the grass container 5 to stand alone are comprised of the front stands 52a and the rear stands 52b which are separately foldable, a structure may be adopted in which the front stands 52a and the rear stands 52b are swingable about lateral axes, the front stands 52a are respectively coupled to the rear stands 52b by coupling bars 52c which are bendable at the centers to allow the front stands 52a and the rear stands 52b to be interlockingly folded, as illustrated in Fig. 19. Alternatively, a configuration may be adopted in which a suitable pedestal is provided between the ground surface and the grass container 5 to allow the grass container 5 to stand alone.
(4) In the embodiments described above, the tension rods 57 are used as the posture maintaining mechanism 46 for maintaining the mounted postures of the upper links 4A and the lower links 4B to the pillars 3, and the spacers 46b are used as the posture maintaining mechanism 46 for maintaining the mounted postures of the upper links 4A to the pillars 3. Alternatively, as illustrated in Fig. 19, auxiliary brackets 42a and 44a formed with lock holes 42b and 44b may be provided to the upper link main body 42 and the lower link main body 44, respectively, and lock pins 46c may be inserted into the lock holes 42b and 44b, and into lock holes 51a formed in the container brackets (container-side links 51). Thus, the upper link main bodies 42 and the lower link main bodies 44 can be maintained in the appropriate mounted postures. Further, the posture maintaining mechanism 46 in which the posture maintenance using the lock pins, and the posture maintenance by the tension rods 57 and the spacers of the previous embodiment are combined, is also possible.
(5) In the embodiments described above, the posture maintaining mechanism 46 for maintaining the postures of the upper mounting brackets 41 with respect to the upper link main bodies 42 and the posture maintaining mechanism 46 for maintaining the postures of the lower mounting brackets 43 with respect to the lower link main bodies 44 are realized by the swing prevention members 46a which are plate members respectively provided to the upper link main bodies 42 or the lower link main bodies 44. Alternatively, the swing prevention members 46a may be provided to the upper mounting brackets 41 or the lower mounting brackets 43. Alternatively, the swing prevention members may be provided to the link pins 45 as the posture maintaining mechanism 46. Alternatively, lock-pin structures may be realized in order to maintain the posture of the upper mounting brackets 41 with respect to the upper link main bodies 42, and/or the posture of the lower mounting brackets 43 with respect to the lower link main bodies 44.
(6) In the embodiments described above, although a right-and-left dumping cylinders 58b are provided, only one dumping cylinder may be provided. Such a single dumping cylinder 58b is coupled to a dumping arm swingably provided about the swing axis P4 below an intermediate part of the grass container 5 in the lateral direction. When swinging the dumping arm 58c about the swing axis P4, the grass container 5 is also swung about the swing axis P4, and the grass container 5 is switched between the elevated discharging posture and the lowered collecting posture by the action of the right-and-left dumping linkage mechanism 58a. The single dumping cylinder 58b and the single dumping arm are stored in a recessed portion formed in the bottom plate of the container main body 50, when the grass container 5 is switched to the lowered collecting posture.

The present invention is applicable to the riding-type mower provided with the engine, the pillars, the linkage mechanism, and the grass container.

In the foregoing specification and specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present invention. The benefits and advantages, solutions to problems, and any element(s) that may cause any benefit, advantage and/or solution to occur or become more pronounced are not to be construed as a critical, required and/or essential features or elements of any or all the claims. The invention is defined solely by the appended claims including any amendments made during the pendency of this application and all equivalents of those claims as issued.

## Claims

1. A riding-type mower, comprising:
a body frame (1) movably supported by front wheels (2a) and rear wheels (2b);
a cockpit (20) arranged over the body frame (1), the cockpit (20) having an operator's seat (21);
a pair of pillars (3) fixed to the body frame (1), each of the pillars (3)
extending upwardly towards a space above the operator's seat,
having a base end part (3b) attached to the body frame (1) and a free end part (3a) at which a coupling part (3A) is formed, and
being spaced out from each other with respect to the width direction of the mower;
a linkage mechanism (4) coupled to the pair of pillars (3) at positions below the coupling part (3A) of each pillar (3); and
a grass container (5) held by the linkage mechanism (4);
**characterized by**
an upper unit (30) disposed between mutually-facing inner side surfaces of the free end part (3a) of each pillar (3), the upper unit (30) being swingably coupled to the coupling part (3A) of each pillar (3) about a swing axis (P1) extending along the width direction of the mower, and being configured to swing within a predetermined swing range between an extended swung position and an retracted swung position.

2. The riding-type mower according to claim 1, wherein the riding-type mower is configured such that the upper unit (30) is positioned at the extended swung position in normal use, and that the upper unit (30) is positioned at the retracted swung position which is lower than the extended swung position.

3. The riding-type mower according to claim 1 or 2, further comprising a reverse rotation preventing mechanism (39) configured to prevent the upper unit (30) from swinging beyond the predetermined swing range between the extended swung position and the retracted swung position.

4. The riding-type mower according to claim 1, 2 or 3, wherein the upper unit (30) has a substantially U-like shape, both ends of the upper unit (30) being swingably attached to the inner side surfaces of the coupling parts (30A) of the pair of pillars (3) about the swing axis (P1).

5. The riding-type mower according to claim 4, wherein at least a top part (30b) being most distant from the swing axis (P1) and the parts (30a) vicinity of the both ends of the upper unit (30) are configured to swing within a space a width of which is narrower than the distance between the pair of pillars (3).

6. The riding-type mower according to any one of claims 1 to 5, wherein
the top part (30b) of the upper unit (30) is positioned above the swing axis (P1) when the upper unit (30) is positioned at the extended swung position, and
the top part (30b) of the upper unit (30) is positioned below the swing axis (P1) when the upper unit (30) is positioned at the retracted swung position.

7. The riding-type mower of any one of claims 1 to 6, wherein the coupling part (3A) of each pillar (3) includes a locking mechanism (32) configured to lock the upper unit (30) at the extended swung position and the retracted swung position.

8. The riding-type mower according to claim 7, wherein
the lock mechanism (32) includes:
a first lock hole (32a) formed in the coupling part (3A) of each pillar (3), and
a lock hole (32c) formed in the upper unit (30), and
the coupling part (3A) and the upper unit (30) are configured such that a lock pin (32d) can be inserted along the swing axis through both of the first lock hole (32a) and the lock hole (32c) so as to prevent the upper unit (30) from swinging when the upper unit (30) is positioned at the extended swung position.

9. The riding-type mower according to claim 7 or 8, wherein
the lock mechanism (32) includes:
a second lock hole (32b) formed in the coupling part (3A) of each pillar (3), and
a lock hole (32c) formed in the upper unit (30), and
the coupling part (3A) and the upper unit (30) are configured such that a lock pin (32d) can be inserted along the swing axis through both of the second lock hole (32b) and the lock hole (32c) so as to prevent the upper unit (30) from swinging when the upper unit (30) is positioned at the retracted swung position.

10. The riding-type mower of any one of claims 1 to 9, wherein the coupling part (3A) of each pillar (3) includes a reserve stopper (34) configured to prevent the upper unit (30) from swinging downwardly from the extended swung position.

11. The riding-type mower according to claim 10, wherein the reserve stopper (34) is configured to prevent the upper unit (30) from swinging over the operator's seat (21) from the extended swung position to the retracted swung position of the upper unit (30).

12. The riding-type mower of any one of claims 1 to 11, further comprising a swing control implement (31c) configured to suppress the swing of the upper unit (30) by a frictional force.

13. The riding-type mower of any one of claims 1 to 12, wherein
the upper unit (30) has a substantially U shape-like frame formed from a square pipe, the top part (30b) of the square pipe being bent such that the top part (30b) projects over the space above the operator's seat (21) when the upper unit (30) is at the extended swung position,
each pillar (3) is formed from a square pipe, and
each of the coupling parts (3A) is a U-shaped bracket that surrounds the free end parts (3a) of a corresponding pillar (3) and has an extended portion projected from the pillar (3) toward the rear direction of the mower.

14. The riding-type mower according to any one of claims 1 to 13, wherein the pair of pillars (3) are disposed behind a backrest of the operator's seat (21), and the upper unit (30) is located behind the backrest at the retracted swung position.

15. The riding-type mower according to any one of claims 1 to 14, wherein
the linkage mechanism (4) is a parallel link mechanism (4) having a pair of upper links (4A) and a pair of lower links (4B), each of the upper links (4A) and each of the lower links (4b) being individually and detachably attached to the pair of pillars (3), and
the pair of upper links (4A) and the pair of lower links (4B) are configured to hold the grass container (5) between the upper links (4A) and between the lower links (4B).

16. The riding-type mower according to any one of claims 1 to 15, further comprising a pair of piston cylinders (54) configured to elevate the linkage mechanism (4), one end of each piston cylinder (54) being swingably coupled to the body frame (1) or the corresponding pillar (3), and the other end of each piston cylinder (54) being detachably coupled to the link mechanism (4).

## Patentansprüche

1. Aufsitzmäher, mit:
einem Karosserierahmen (1), der durch Vorderräder (2a) und Hinterräder (2b) beweglich unterstützt wird;
einem Führerstand (20), der über dem Karosserierahmen (1) angeordnet ist, wobei der Führerstand (20) einen Fahrersitz (21) aufweist;
einem Paar Säulen (3), die am Karosserierahmen (1) befestigt sind, wobei sich jede der Säulen (3) nach oben zu einem Raum über dem Fahrersitz erstreckt, einen Basisendteil (3b), der am Karosserierahmen (1) angebracht ist, und einen freien Endteil (3a) aufweist, an dem ein Kopplungsteil (3A) ausgebildet ist, und bezüglich der Breitenrichtung des Mähers zueinander in Abständen verteilt sind;
einem Verbindungsmechanismus (4), der mit dem Säulenpaar (3) an Positionen unter dem Kopplungsteil (3A) jeder Säule (3) gekoppelt ist; und
einem Grasbehälter (5), der durch den
Verbindungsmechanismus (4) gehalten wird;
**gekennzeichnet durch**
eine obere Einheit (30), die zwischen einander gegenüberliegenden Innenseitenflächen des freien Endteils (3a) jeder Säule (3) angeordnet ist, wobei die obere Einheit (30) um eine Schwenkachse (P1) schwenkbar, die sich längs der Breitenrichtung des Mähers erstreckt, mit dem Kopplungsteil (3A) jeder Säule (3) gekoppelt ist, und
konfiguriert ist, innerhalb eines vorgegebenen Schwenkbereichs zwischen einer ausgefahrenen geschwenkten Position und einer eingezogenen geschwenkten Position zu schwenken.

2. Aufsitzmäher nach Anspruch 1, wobei der Aufsitzmäher so konfiguriert ist, dass die obere Einheit (30) im Normalgebrauch an der ausgefahrenen geschwenkten Position angeordnet ist, und dass die obere Einheit (30) an der eingezogenen geschwenkten Position angeordnet ist, die niedriger als die ausgefahrene geschwenkte Position ist.

3. Aufsitzmäher nach Anspruch 1 oder 2, der ferner einen Gegendrehungsverhinderungsmechanismus (39) aufweist, der konfiguriert ist, die obere Einheit (30) daran zu hindern, über den vorgegebenen Schwenkbereich zwischen der ausgefahrenen geschwenkten Position und der eingezogenen geschwenkten Position hinaus zu schwenken.

4. Aufsitzmäher nach Anspruch 1, 2 oder 3, wobei die obere Einheit (30) im Wesentlichen eine U-Form aufweist, wobei beide Enden der oberen Einheit (30) um die Schwenkachse (P1) schwenkbar an den Innenseitenflächen der Kopplungsteils (30A) des Säulenpaars (3) angebracht sind.

5. Aufsitzmäher nach Anspruch 4, wobei mindestens ein oberster Teil (30b), der von der Schwenkachse (P1) am weitesten entfernt ist, und die Teile (30a) in der Nähe beider Enden der oberen Einheit (30) konfiguriert sind, innerhalb eines Raums zu schwenken, dessen Breite schmaler als der Abstand zwischen dem Säulenpaar (3) ist.

6. Aufsitzmäher nach einem der Ansprüche 1 bis 5, wobei der oberste Teil (30b) der oberen Einheit (30) über der Schwenkachse (P1) angeordnet ist, wenn die obere Einheit (30) in der ausgefahrenen geschwenkten Position angeordnet ist, und der oberste Teil (30b) der oberen Einheit (30) unter der Schwenkachse (P1) angeordnet ist, wenn die obere Einheit (30) in der eingezogenen geschwenkten Position angeordnet ist.

7. Aufsitzmäher nach einem der Ansprüche 1 bis 6, wobei der Kopplungsteil (3A) jeder Säule (3) einen Arretierungsmechanismus (32) aufweist, der konfiguriert ist, die obere Einheit (30) in der ausgefahrenen geschwenkten Position und der eingezogenen geschwenkten Position zu arretieren.

8. Aufsitzmäher nach Anspruch 7, wobei der Arretierungsmechanismus (32) aufweist:
ein erstes Arretierungsloch (32a), das im Kopplungsteil (3A) jeder Säule (3) ausgebildet ist, und
ein Arretierungsloch (32c), das in der oberen Einheit (30) ausgebildet ist, und
der Kopplungsteil (3A) und die obere Einheit (30) so konfiguriert sind, dass ein Arretierungsstift (32d) längs der Schwenkachse sowohl durch das erste Arretierungsloch (32a) als auch durch das Arretierungsloch (32c) eingesetzt werden kann, um die obere Einheit (30) am Schwenken zu hindern, wenn die obere Einheit (30) in der ausgefahrenen geschwenkten Position angeordnet ist.

9. Aufsitzmäher nach Anspruch 7 oder 8, wobei der Arretierungsmechanismus (32) aufweist:
ein zweites Arretierungsloch (32b), das im Kopplungsteil (3A) jeder Säule (3) ausgebildet ist, und
ein Arretierungsloch (32c), das in der oberen Einheit (30) ausgebildet ist, und
der Kopplungsteil (3A) und die obere Einheit (30) so konfiguriert sind, dass ein Arretierungsstift (32d) längs der Schwenkachse sowohl durch das zweite Arretierungsloch (32b) als auch durch das Arretierungsloch (32c) eingesetzt werden kann, um die obere Einheit (30) am Schwenken zu hindern, wenn die obere Einheit (30) in der eingezogenen geschwenkten Position angeordnet ist.

10. Aufsitzmäher nach einem der Ansprüche 1 bis 9, wobei der Kopplungsteil (3A) jeder Säule (3) einen Reserveanschlag (34) aufweist, der konfiguriert ist, die obere Einheit (30) am Schwenken nach unten aus der ausgefahrenen geschwenkten Position zu hindern.

11. Aufsitzmäher nach Anspruch 10, wobei der Reserveanschlag (34) konfiguriert ist, die obere Einheit (30) am Schwenken über den Fahrersitz (21) aus der ausgefahrenen geschwenkten Position zur eingezogenen geschwenkten Position der oberen Einheit (30) zu hindern.

12. Aufsitzmäher nach einem der Ansprüche 1 bis 11, der ferner ein Schwenksteuergerät (31c) aufweist, das konfiguriert ist, das Schwenken der oberen Einheit (30) durch eine Reibungskraft zu unterbinden.

13. Aufsitzmäher nach einem der Ansprüche 1 bis 12, wobei die obere Einheit (30) einen im Wesentlichen U-förmigen Rahmen aufweist, der aus einer quadratischen Röhre ausgebildet ist, wobei der oberste Teil (30b) der quadratischen Röhre so gebogen ist, dass der oberste Teil (30b) über den Raum über dem Fahrersitz (21) vorsteht, wenn sich die obere Einheit (30) in der ausgefahrenen geschwenkten Position befindet,
jede Säule (3) aus einer quadratischen Röhre ausgebildet ist, und
jedes der Kopplungsteile (3A) ein U-förmiger Winkelträger ist, der die freien Endteile (3a) einer entsprechenden Säule (3) umgibt und einen Erweiterungsabschnitt aufweist, der von der Säule (3) in die rückwärtige Richtung des Mähers vorsteht.

14. Aufsitzmäher nach einem der Ansprüche 1 bis 13, wobei das Säulenpaar (3) hinter einer Rücklehne des Fahrersitzes (21) angeordnet ist und die obere Einheit (30) in der eingezogenen geschwenkten Position hinter der Rückenlehne angeordnet ist.

15. Aufsitzmäher nach einem der Ansprüche 1 bis 14, wobei der Verbindungsmechanismus (4) ein paralleler Verbindungsmechanismus (4) ist, der ein Paar obere Verbindungstücke (4A) und ein Paar untere Verbindungstücke (4B) aufweist, wobei jedes der oberen Verbindungstücke (4A) und jedes der unteren Verbindungstücke (4b) einzeln und abnehmbar am Säulenpaar (3) angebracht ist, und
das Paar der oberen Verbindungstücke (4A) und das Paar der unteren Verbindungstücke (4B) konfiguriert sind, den Grasbehälter (5) zwischen den oberen Verbindungstücken (4A) und zwischen den unteren Verbindungstücken (4B) zu halten.

16. Aufsitzmäher nach einem der Ansprüche 1 bis 15, der ferner ein Paar Zylinderkolben (54) aufweist, die konfiguriert sind, den Verbindungsmechanismus (4) anzuheben, wobei ein Ende jedes Zylinderkolbens (54) schwenkbar mit dem Karosserierahmen (1) oder der entsprechenden Säule (3) gekoppelt ist, und das andere Ende jedes Zylinderkolbens (54) abnehmbar mit dem Verbindungsmechanismus (4) gekoppelt ist.

## Revendications

1. Tondeuse de type tracteur, comprenant :
un châssis (1) supporté de manière mobile par les roues avant (2a) et les roues arrière (2b) ;
une cabine de conduite (20) disposée au-dessus du châssis (1), ladite cabine de conduite (20) étant pourvue d'un siège de conducteur (21) ;
une paire de montants (3) fixés au châssis (1), chaque montant (3) s'étendant vers le haut, vers un espace au-dessus du siège de conducteur, présentant une partie d'extrémité inférieure (3b) raccordée au châssis (1) et une partie d'extrémité libre (3a) contre laquelle est formée une pièce d'accouplement (3A), et
étant espacés l'un de l'autre dans le sens de la largeur de la tondeuse ;
un mécanisme de liaison (4) raccordé à la paire de montants (3) à un emplacement sous la pièce d'accouplement (3A) de chaque montant (3) ; et
un bac de ramassage d'herbe (5) maintenu par le mécanisme de liaison (4) ;
**caractérisé par**
une unité supérieure (30) disposée entre des surfaces latérales intérieures opposées l'une à l'autre de la partie d'extrémité libre (3a) de chaque montant (3), ladite unité supérieure (30) étant reliée à la pièce d'accouplement (3A) de chaque montant (3) de manière oscillante autour d'un axe d'oscillation (P1) s'étendant dans le sens de la largeur de la tondeuse, et étant prévue pour osciller dans une plage d'oscillation définie entre une position de pivotement en extension et une position de pivotement en retrait.

2. Tondeuse de type tracteur selon la revendication 1, où ladite tondeuse de type tracteur est configurée de telle manière que l'unité supérieure (30) est en position de pivotement en extension en service normal, et que l'unité supérieure (30) est en position de pivotement en retrait sous la position de pivotement en extension.

3. Tondeuse de type tracteur selon la revendication 1 ou la revendication 2, comprenant en outre un mécanisme de blocage de rotation en sens inverse (39) prévu pour empêcher l'unité supérieure (30) de pivoter au-delà de la plage d'oscillation définie entre la position de pivotement en extension et la position de pivotement en retrait.

4. Tondeuse de type tracteur selon la revendication 1, 2 ou la revendication 3, où l'unité supérieure (30) a substantiellement une forme en U, les deux extrémités de l'unité supérieure (30) étant raccordées aux surfaces latérales intérieures des pièces d'accouplements (30A) de la paire de montants (3) de manière oscillante autour de l'axe d'oscillation (P1).

5. Tondeuse de type tracteur selon la revendication 4, où au moins une partie de sommet (30b) plus éloignée de l'axe d'oscillation (P1) et les parties (30a) à proximité des deux extrémités de l'unité supérieure (30) sont prévues pour pivoter dans une plage dont la largeur est inférieure à la distance entre les deux montants (3).

6. Tondeuse de type tracteur selon l'une des revendications 1 à 5, où la partie de sommet (30b) de l'unité supérieure (30) est située au-dessus de l'axe d'oscillation (P1) quand l'unité supérieure (30) est en position de pivotement en extension, et où la partie de sommet (30b) de l'unité supérieure (30) est située en dessous de l'axe d'oscillation (P1) quand l'unité supérieure (30) est en position de pivotement en retrait.

7. Tondeuse de type tracteur selon l'une des revendications 1 à 6, où la pièce d'accouplement (3A) de chaque montant (3) comprend un mécanisme de verrouillage (32) prévu pour bloquer l'unité supérieure (30) en position de pivotement en extension et en position de pivotement en retrait.

8. Tondeuse de type tracteur selon la revendication 7, où le mécanisme de verrouillage (32) comporte :
un premier trou de blocage (32a) formé dans la pièce d'accouplement (3A) de chaque montant (3), et
un trou de blocage (32c) formé dans l'unité supérieure (30), et où
la pièce d'accouplement (3A) et l'unité supérieure (30) sont prévues de telle manière qu'une cheville de blocage (32d) peut être passée dans le premier trou de blocage (32a) et le trou de blocage (32c) le long de l'axe d'oscillation pour empêcher l'unité supérieure (30) d'osciller quand ladite unité supérieure (30) est en position de pivotement en extension.

9. Tondeuse de type tracteur selon la revendication 7 ou la revendication 8, où le mécanisme de verrouillage (32) comporte :
un deuxième trou de blocage (32b) formé dans la pièce d'accouplement (3A) de chaque montant (3), et
un trou de blocage (32c) formé dans l'unité supérieure (30), et où
la pièce d'accouplement (3A) et l'unité supérieure (30) sont prévues de telle manière qu'une cheville de blocage (32d) peut être passée dans le deuxième trou de blocage (32b) et le trou de blocage (32c) le long de l'axe d'oscillation pour empêcher l'unité supérieure (30) d'osciller quand ladite unité supérieure (30) est en position de pivotement en retrait.

10. Tondeuse de type tracteur selon l'une des revendications 1 à 9, où la pièce d'accouplement (3A) de chaque montant (3) présente une butée de réserve (34) prévue pour empêcher l'unité supérieure (30) d'osciller vers le bas depuis la position de pivotement en extension.

11. Tondeuse de type tracteur selon la revendication 10, où la butée de réserve (34) est prévue pour empêcher l'unité supérieure (30) s'osciller au-dessus du siège de conducteur (21) de la position de pivotement en extension vers la position de pivotement en retrait de l'unité supérieure (30).

12. Tondeuse de type tracteur selon l'une des revendications 1 à 11, comprenant en outre un accessoire de commande d'oscillation (31c) prévu pour empêcher l'oscillation de l'unité supérieure (30) par force de friction.

13. Tondeuse de type tracteur selon l'une des revendications 1 à 12, où l'unité supérieure (30) comporte un cadre substantiellement en forme en U composé d'un tube à section carrée, la partie de sommet (30b) du tube à section carrée étant pliée de telle manière que ladite partie de sommet (30b) fait saillie dans l'espace au-dessus du siège de conducteur (21) quand l'unité supérieure (30) est en position de pivotement en extension,
chaque montant (3) est constitué d'un tube à section carrée, et
chaque pièce d'accouplement (3A) est une console en forme de U qui entoure la partie d'extrémité libre (3a) du montant (3) correspondant, et présente une partie en extension faisant saillie depuis le montant (3) vers l'arrière de la tondeuse.

14. Tondeuse de type tracteur selon l'une des revendications 1 à 13, où les deux montants (3) sont disposés derrière le dossier du siège de conducteur (21), et où l'unité supérieure (30) est située derrière le dossier en position de pivotement en retrait.

15. Tondeuse de type tracteur selon l'une des revendications 1 à 14, où
le mécanisme de liaison (4) est un mécanisme de liaison parallèle (4) comprenant une paire de barres de liaison supérieures (4A) et une paire de barres de liaison inférieures (4B), chaque barre de liaison supérieure (4A) et chaque barre de liaison inférieure (4b) étant individuellement et amoviblement raccordée à un montant de la paire de montants (3), et où
la paire de barres de liaison supérieures (4A) et la paire de barres de liaison inférieures (4B) sont prévues pour maintenir le bac de ramassage d'herbe (5) entre les barres de liaison supérieures (4A) et entre les barres de liaison inférieures (4B).

16. Tondeuse de type tracteur selon l'une des revendications 1 à 15, comprenant en outre une paire de vérins (54) prévus pour lever le mécanisme de liaison (4), une extrémité de chaque vérin (54) étant raccordée de manière pivotante au châssis (1) ou au montant (3) correspondant, et l'autre extrémité de chaque vérin (54) étant raccordée de manière amovible au mécanisme de liaison (4).
